# EUROPEAN PATENT SPECIFICATION

(11) **EP 3 193 129 B1**
(45) Date of publication and mention of the grant of the patent: **20.03.2019**
(21) Application number: 17151492.0
(22) Date of filing: 13.01.2017
(51) Int. Cl.: F41A 23/10, F16M 11/16, F41A 23/02, F41A 23/06, F41C 23/16

(54) **POD SYSTEM**
ZWEIBEIN
BIPIED

(30) Priority: 15.01.2016 US 201662279460 P; 29.12.2016 US 201615394250
(43) Date of publication of application: 19.07.2017
(73) Proprietor: Leapers, Inc, Livonia, MI 48150 (US)
(72) Inventor: DING, Tai-Lai, Northville, MI 48168 (US); YU, Tat Shing, Plymouth, MI 48170 (US)
(74) Representative: Haseltine Lake LLP

(56) References cited:
- CN-Y- 2 724 048
- DE-U1-202013 003 662
- US-A- 5 213 296

## Description

### TECHNICAL FIELD

This disclosure relates to a subassemblies and components of a pod assembly and a firearm implement system

### BACKGROUND

Pods (such as, without limitation, camera supports, firearm supports and the like, which may be configured as mono-pods, bi-pods, tri-pods and the like) are known. While existing pods perform adequately for their intended purpose, improvements to pods are continuously being sought in order to advance the arts.

CN 2724048 describes a tripod capable of regulating foot tube spreading angle. The tripod comprises extensible foot tubes, protecting caps, foot tube joints which connect the foot tubes and the protecting caps, and holders on the protecting caps. Each of the protecting caps is provided with clamping positions for various field angles. The foot tube joints are hinged with the protecting caps and are provided with filling slots that are provided with an elastic button by male pins and torsional springs. The button is correspondingly buckled with the clamping positions on the protecting caps. Each foot tube can be independently controlled and adjusted and angle extending grades can be adjusted.

US 5,213,296 describes a connecting assembly for a tripod. The connecting assembly comprises a coupling pipe having a ferruled lower end with three radial lugs extending therefrom, and three legs having clevis connectors on their respective upper ends. The clevis connectors are hingedly attached to respective lugs by pivot pins engaged through registered holes thereon. An elongate locking bar is slidingly disposed in a rear cavity at the base of each connector. A compression spring urges each locking bar forward towards a selected locking recess formed on the periphery of an associated lug. A lever is pivotably secured within each connector, and has a first arm extending through an aperture on a first prong of the connector and a second arm resting against a transverse cavity in an associated locking bar. Each locking bar can be retracted from an engaged recess by squeezing the first arm of an associated lever towards its connector so as to allow the rotation of an associated leg to a new locking position about its lug.

DE 20 2013 003 662 describes a tripod for an optical device. The tripod comprises tripod legs, which are arranged pivotably on respective assigned star arms of a tripod star. The tripod further comprises a blocking device for each of the tripod legs, which is pivotable on the star arm and has a blocking position in which a tripod leg is fixed on the star arm against pivoting movement. The support arm can be brought into blocking engagement with the locking bushing in the blocking position.

### SUMMARY

The invention is defined in the attached independent claim. Further, optional features may be found in the sub-claims appended thereto.

This section provides a general summary of the disclosure, and is not a comprehensive disclosure of its full scope or all of its features.

One aspect of the disclosure provides a biased latch subassembly. The biased latch subassembly includes a shaft body, a rocker latch, a latch pin, a radial biasing member, a latch actuator pull sleeve, a rocker latch-engaging finger and an axial biasing member. The shaft body defines a plurality of passages including at least a first passage and a second passage. The rocker latch is disposed within the first passage. The latch pin extends through the second passage and a co-axially-aligned latch pin-receiving passage of the rocker latch for rotatably-connecting the rocker latch to the shaft body. The radial biasing member is disposed within the first passage between a radial biasing member engagement surface of the first passage and a radial-outwardly-urging surface of the rocker latch. The latch actuator pull sleeve has an axial passage sized for receiving a portion of a length of the shaft body. The latch actuator pull sleeve is slidably-disposed about an outer surface portion of the shaft body and at least a portion of a length of a radial-inwardly-urging surface of the rocker latch exposed by the first passage. The rocker latch-engaging finger is secured within a radial passage of the latch actuator pull sleeve. The radial passage is in fluid communication with the axial passage of the latch actuator pull sleeve and the first passage of the shaft body. A rocker-latch-engaging surface of the rocker latch-engaging finger is disposed adjacent a radial-inwardly-urging surface of the rocker latch. The axial biasing member includes an inner surface defining an axial passage extending between a proximal surface of the axial biasing member and a distal surface of the axial biasing member. The axial passage of the axial biasing member is sized for receiving some of the portion of the length of the shaft body. A first portion and a second portion of an inner surface of the latch actuator pull sleeve in combination with some of a first portion and a second portion of the outer surface portion of the shaft body forms a cavity that is sized for receiving the axial biasing member.

Implementations of the disclosure may include one or more of the following optional features. For example, the axial biasing member imparts an axial bias to the latch actuator pull sleeve relative the shaft body as a result of: the proximal surface of the axial biasing member being disposed adjacent the second portion of the outer surface portion of the shaft body and the distal surface of the axial biasing member being disposed adjacent the second portion of the inner surface of the latch actuator pull sleeve.

In some implementations, the axial bias imparted by the axial biasing member to the latch actuator pull sleeve relative the shaft body urges slidable adjustment of the rocker-latch-engaging surface of the rocker latch-engaging finger from a proximal end of the radial-inwardly-urging surface of the rocker latch toward a distal end of the radial-inwardly-urging surface of the rocker latch for inducing first direction rotation of the rocker latch about the latch pin.

In some examples, an axial pull force imparted to the latch actuator pull sleeve that is opposite the axial bias imparted by the axial biasing member to the latch actuator pull sleeve urges slidable movement of latch actuator pull sleeve relative the shaft body such that the rocker latch-engaging finger is slidably-adjusted from the distal end of the radial-inwardly-urging surface of the rocker latch toward the proximal end of the radial-inwardly-urging surface of the rocker latch for inducing second direction rotation of the rocker latch about the latch pin that is opposite to the first direction rotation.

In some implementations, the axial pull force imparted to the latch actuator pull sleeve also results in a reduced axial spacing between the outer surface portion of the shaft body and the second portion of the inner surface of the latch actuator pull sleeve for axially collapsing the cavity for compressing the axial biasing member between the second portion of the outer surface portion of the shaft body and the second portion of the inner surface of the latch actuator pull sleeve.

In some examples, the second passage radially traverses and is in fluid communication with the first passage.

In some implementations, the second passage is radially offset from the first passage by approximately 180°.

In some examples, the first portion of the outer surface portion of the shaft body is defined by a first diameter of the shaft body. The second portion of the outer surface portion of the shaft body projects radially away from the first portion of the outer surface portion of the shaft body for defining a second diameter of the shaft body.

In some implementations, the first diameter of the shaft body is less than the second diameter of the shaft body.

In some examples, the first portion of the inner surface portion of the latch actuator pull sleeve defines a first passage diameter of the axial passage of the latch actuator pull sleeve. The second portion of the inner surface portion of the latch actuator pull sleeve projects radially inwardly from the first portion of the inner surface portion of the latch actuator pull sleeve for defining a second passage diameter of the axial passage of the latch actuator pull sleeve.

In some implementations, the first passage diameter of the axial passage of the latch actuator pull sleeve is greater than the second passage diameter of the axial passage of the latch actuator pull sleeve.

Another aspect of the disclosure provides an indexing plate. The indexing plate includes a plate body defining a device-engaging body portion and a biased latch subassembly-engaging body portion extending from the device-engaging body portion at a biased latch subassembly-engaging body portion angle. The device-engaging body portion includes an inner surface, an outer surface, an upper surface and a lower surface. The device-engaging body portion is further defined by a thickness extending between the inner surface and the outer surface. The device-engaging body portion defines at least one fastener passage extending through the thickness. An outer surface of the biased latch subassembly-engaging body portion defines a plurality of rocker latch-receiving recesses that extend into a thickness of the biased latch subassembly-engaging body portion at a depth. The thickness of the biased latch subassembly-engaging body portion is bound by the outer surface of the biased latch subassembly-engaging body portion and an inner surface of the biased latch subassembly-engaging body portion. The depth is not equal to the thickness of the biased latch subassembly-engaging body portion. Each rocker latch-receiving recess of the plurality of rocker latch-receiving recesses includes a recess surface and a perimeter recess surface. The plate body further defines an indexing plate pivot-pin-receiving passage extending through at least one of the firearm-engaging body portion and the biased latch subassembly-engaging body portion.

Implementations of the disclosure may include one or more of the following optional features. For example, the perimeter recess surface is connected to and extends substantially perpendicularly from the outer surface of the biased latch subassembly-engaging body portion.

In some implementations, the recess surface is connected to and extends substantially perpendicularly from the perimeter recess surface at a distance approximately equal to the depth such that the plurality of rocker latch-receiving recesses do not extend through the entire thickness of the biased latch subassembly-engaging body portion.

In some examples, the plurality of rocker latch-receiving recesses include at least two rocker latch-receiving recesses.

In some implementations, the at least two rocker latch-receiving recesses include: a neutral leg orientation recess, at least one positively-indexed leg orientation recess that is positively arcuately offset from the neutral leg orientation recess, and at least one negatively-indexed leg orientation recess that is negatively arcuately offset from the neutral leg orientation recess.

In some examples, the at least one positively-indexed leg orientation recess includes: a first positively-indexed leg orientation recess that is positively arcuately offset from the neutral leg orientation recess at a first positive distance and a second positively-indexed leg orientation recess that is positively arcuately offset from the neutral leg orientation recess at a second positive distance that is greater than the first positive distance. The at least one negatively-indexed leg orientation recess includes: a first negatively-indexed leg orientation recess that is negatively arcuately offset from the neutral leg orientation recess at a first negative distance and a second negatively-indexed leg orientation recess that is negatively arcuately offset from the neutral leg orientation recess at a second negative distance that is greater than the first negative distance.

In some implementations, the first positively-indexed leg orientation recess is positively arcuately offset from the neutral leg orientation recess at an angle approximately equal to +45°. The second positively-indexed leg orientation recess is positively arcuately offset from the neutral leg orientation recess at an angle approximately equal to +90°. The first negatively-indexed leg orientation recess is negatively arcuately offset from the neutral leg orientation recess at an angle approximately equal to -45°. The second negatively-indexed leg orientation recess is negatively arcuately offset from the neutral leg orientation recess at an angle approximately equal to -90°.

In some examples, the device-engaging body portion is further defined by: a central body portion, a first lateral body portion and a second lateral body portion. Each of the first lateral body portion and the second lateral body portion are defined by a proximal end and a distal end. The central body portion extends between the proximal end of the first lateral body portion and the proximal end of the second lateral body portion.

In some implementations, the at least one fastener passage includes: a first fastener passage and a second fastener passage. The first fastener passage is defined by the first lateral body portion. The second fastener passage is defined by the second lateral body portion.

In some examples, the biased latch subassembly-engaging body portion extends from the central body portion of the firearm-engaging body portion.

In some implementations, the biased latch subassembly-engaging body portion angle is bound by a first reference plane that is aligned with and extends across the outer surface of the biased latch subassembly-engaging body portion and a second reference plane that is aligned with and extends across the outer surface of the firearm-engaging body portion. The second reference plane is substantially parallel to a third reference plane that is aligned with and extends across the inner surface of the firearm-engaging body portion.

In some examples, the biased latch subassembly-engaging body portion angle is approximately equal to 20°.

In some implementations, the indexing plate pivot-pin-receiving passage extends through at least one of the firearm-engaging body portion and the biased latch subassembly-engaging body portion between the inner surface of the firearm-engaging body portion and the outer surface of the biased latch subassembly-engaging body portion.

One aspect of the disclosure provides a pod assembly. The pod assembly includes a leg indexing portion including the leg indexing plate, the shaft body and a pivot pin. The shaft body of the biased latch subassembly defines a shaft body pivot-pin-receiving passage. The indexing plate pivot-pin-receiving passage of the indexing plate is co-axially aligned with the shaft body pivot-pin-receiving passage and the pivot pin is disposed within each of the indexing plate pivot-pin-receiving passage and the shaft body pivot-pin-receiving passage for pivotally-connecting the biased latch subassembly to the indexing plate.

Implementations of the disclosure may include one or more of the following optional features. For example, the axial biasing member imparts an axial bias to the latch actuator pull sleeve relative the shaft body while the radial biasing member imparts a radial bias to the rocker latch to impart rotation of the rocker latch for urging registration of a head portion of the rocker latch into a rocker latch-receiving recess of the plurality of rocker latch-receiving recesses to prevent pivotal movement of the biased latch subassembly relative to the indexing plate.

In some implementations, application of a pulling force to the latch actuator pull sleeve opposite the axial bias overcomes the axial bias imparted by the axial biasing member and the radial bias imparted by the radial biasing member in order to impart an opposite rotation of the rocker latch for de-registering the head portion of the rocker latch from the rocker latch-receiving recess of the plurality of rocker latch-receiving recesses to permit pivotal movement of the biased latch subassembly relative to the indexing plate.

One aspect of the disclosure provides a firearm implement system. The firearm implement system includes a firearm and the pod assembly. The firearm has at least one mounting rail. The device-engaging body portion of the plate body of the indexing plate of the pod assembly is attached to one mounting rail of the at least one mounting rail.

Implementations of the disclosure may include one or more of the following optional features. For example, the pod assembly is a mono-pod. Furthermore, the pod assembly may be a hand-grip.

In some implementations, the at least one mounting rail includes: a first lateral side mounting rail, a second lateral side mounting rail arranged opposite the first lateral side mounting rail and an upper mounting rail. The at least one mounting rail does not include a lower mounting rail arranged opposite the upper mounting rail. The one mounting rail that the device-engaging body portion of the pod assembly is attached to is the first lateral side mounting rail.

In some examples, the at least one mounting rail further includes: a first upper-intermediate side mounting rail arranged between the first lateral side mounting rail and the upper mounting rail, a second upper-intermediate side mounting rail arranged between the second lateral side mounting rail and the upper mounting rail, a first lower-intermediate side mounting rail arranged opposite the second upper-intermediate side mounting rail and a second lower-intermediate side mounting rail arranged opposite the first upper-intermediate side mounting rail.

One aspect of the disclosure provides a firearm implement system. The firearm implement system includes a firearm, a first pod assembly and a second pod assembly. The firearm has at least two mounting rails. The device-engaging body portion of the plate body of the indexing plate of a first pod assembly is attached to a first mounting rail of the at least two one mounting rails. The device-engaging body portion of the plate body of the indexing plate of a second pod assembly is attached to a second mounting rail of the at least two mounting rails.

Implementations of the disclosure may include one or more of the following optional features. For example, the first pod assembly and the second pod assembly cooperate with the firearm to form a bi-pod. Furthermore, at least one of the first pod assembly and the second pod assembly is a hand-grip.

In some implementations, the at least two mounting rails include: a first lateral side mounting rail, a second lateral side mounting rail arranged opposite the first lateral side mounting rail and an upper mounting rail. The at least two mounting rails do not include a lower mounting rail arranged opposite the upper mounting rail. The first mounting rail that the device-engaging body portion of the first pod assembly is attached to is the first lateral side mounting rail. The second mounting rail that the device-engaging body portion of the second pod assembly is attached to is the second lateral side mounting rail.

In some examples, the at least two mounting rails further includes: a first upper-intermediate side mounting rail arranged between the first lateral side mounting rail and the upper mounting rail, a second upper-intermediate side mounting rail arranged between the second lateral side mounting rail (and the upper mounting rail, a first lower-intermediate side mounting rail arranged opposite the second upper-intermediate side mounting rail and a second lower-intermediate side mounting rail arranged opposite the first upper-intermediate side mounting rail.

Yet another aspect of the disclosure provides a method of operating a biased latch subassembly including a shaft body, a rocker latch, a latch pin, a radial biasing member, a latch actuator pull sleeve, a rocker latch-engaging finger and an axial biasing member. The method includes: arranging the rocker latch within a first passage of the shaft body; co-axially aligning and extending the latch pin through a second passage that is co-axially-aligned with a latch pin-receiving passage of the rocker latch for rotatably-connecting the rocker latch to the shaft body; disposing the radial biasing member within the first passage between a radial biasing member engagement surface of the first passage and a radial-outwardly-urging surface of the rocker latch; slidably-disposing the latch actuator pull sleeve about an outer surface portion of the shaft body and at least a portion of a length of a radial-inwardly-urging surface of the rocker latch exposed by the first passage; securing the rocker latch-engaging finger within a radial passage of the latch actuator pull sleeve that is in fluid communication with the axial passage of the latch actuator pull sleeve and the first passage of the shaft body for disposing a rocker-latch-engaging surface of the rocker latch-engaging finger adjacent a radial-inwardly-urging surface of the rocker latch; arranging the axial biasing member including an inner surface defining an axial passage between a proximal surface of the axial biasing member and a distal surface of the axial biasing member. The axial passage of the axial biasing member is sized for receiving some of the portion of the length of the shaft body. A first portion and a second portion of an inner surface of the latch actuator pull sleeve in combination with some of a first portion and a second portion of the outer surface portion of the shaft body forms a cavity that is sized for receiving the axial biasing member. The method also includes: utilizing the axial biasing member for imparting an axial bias to the latch actuator pull sleeve relative the shaft body as a result of the proximal surface of the axial biasing member being disposed adjacent the second portion of the outer surface portion of the shaft body and the distal surface of the axial biasing member being disposed adjacent the second portion of the inner surface of the latch actuator pull sleeve. The axial bias imparted by the axial biasing member to the latch actuator pull sleeve relative the shaft body results in: urging slidable adjustment of the rocker-latch-engaging surface of the rocker latch-engaging finger from a proximal end of the radial-inwardly-urging surface of the rocker latch toward a distal end of the radial-inwardly-urging surface of the rocker latch for inducing first direction rotation of the rocker latch about the latch pin.

Implementations of the disclosure may include one or more of the following optional features. For example, the method also includes imparting an axial pull force to the latch actuator pull sleeve that is opposite the axial bias imparted by the axial biasing member to the latch actuator pull sleeve for urging slidable movement of latch actuator pull sleeve relative the shaft body for slidably-adjusting the rocker latch-engaging finger from the distal end of the radial-inwardly-urging surface of the rocker latch toward the proximal end of the radial-inwardly-urging surface of the rocker latch for inducing second direction rotation of the rocker latch about the latch pin that is opposite to the first direction rotation.

In some implementations, the axial pull force imparted to the latch actuator pull sleeve results in: reducing an axial spacing between the outer surface portion of the shaft body and the second portion of the inner surface of the latch actuator pull sleeve for axially collapsing the cavity for compressing the axial biasing member between the second portion of the outer surface portion of the shaft body and the second portion of the inner surface of the latch actuator pull sleeve.

Another aspect of the disclosure provides a method of operating a pod assembly including the biased latch subassembly and an indexing plate including a plate body defining a device-engaging body portion and a biased latch subassembly-engaging body portion extending from the device-engaging body portion at a biased latch subassembly-engaging body portion angle. The device-engaging body portion includes an inner surface, an outer surface, an upper surface and a lower surface. The device-engaging body portion is further defined by a thickness extending between the inner surface and the outer surface. The device-engaging body portion defines at least one fastener passage extending through the thickness. An outer surface of the biased latch subassembly-engaging body portion defines a plurality of rocker latch-receiving recesses that extend into a thickness of the biased latch subassembly-engaging body portion at a depth. The thickness of the biased latch subassembly-engaging body portion is bound by the outer surface of the biased latch subassembly-engaging body portion and an inner surface of the biased latch subassembly-engaging body portion. The depth is not equal to the thickness of the biased latch subassembly-engaging body portion. Each rocker latch-receiving recess of the plurality of rocker latch-receiving recesses includes a recess surface and a perimeter recess surface. The plate body further defines an indexing plate pivot-pin-receiving passage extending through at least one of the firearm-engaging body portion and the biased latch subassembly-engaging body portion. The method includes: forming a leg indexing portion by disposing a pivot pin within each of the indexing plate pivot-pin-receiving passage of the indexing plate and the shaft body pivot-pin-receiving passage of the biased latch subassembly for pivotally-connecting the biased latch subassembly to the indexing plate with a pivot pin by disposing the pivot pin within each of the indexing plate pivot-pin-receiving passage of the indexing plate and the shaft body pivot-pin-receiving passage of the biased latch subassembly.

Implementations of the disclosure may include one or more of the following optional features. For example, the imparted axial bias by the axial biasing member to the latch actuator pull sleeve relative the shaft body while the radial biasing member that imparts the radial bias to the rocker latch to impart the rotation of the rocker latch results in: urging registration of a head portion of the rocker latch into a rocker latch-receiving recess of the plurality of rocker latch-receiving recesses for preventing pivotal movement of the biased latch subassembly relative to the indexing plate.

In some implementations, the method includes: applying a pulling force to the latch actuator pull sleeve opposite the axial bias for overcoming the axial bias imparted by the axial biasing member and the radial bias imparted by the radial biasing member for imparting an opposite rotation of the rocker latch for de-registering the head portion of the rocker latch from the rocker latch-receiving recess of the plurality of rocker latch-receiving recesses for permitting pivotal movement of the biased latch subassembly relative to the indexing plate.

The details of one or more implementations of the disclosure are set forth in the accompanying drawings and the description below. Other aspects, features, and advantages will be apparent from the description and drawings, and from the claims.

### DESCRIPTION OF DRAWINGS

The drawings described herein are for illustrative purposes only of selected configurations and not all possible implementations, and are not intended to limit the scope of the present disclosure.
FIG. 1A is an exploded isometric view of an exemplary pod assembly.
FIG. 1B is a front assembled isometric view of the pod assembly of FIG. 1A.
FIG. 1C is a rear assembled isometric view of the pod assembly of FIG. 1A.
FIG. 2 is an isometric view of an exemplary shaft body and an exemplary latch pin of an exemplary biased latch subassembly.
FIG. 3 is a cross-sectional view of the shaft body according to line 3-3 of FIG. 2.
FIG. 4 is an isometric view of an exemplary radial biasing member of an exemplary biased latch subassembly.
FIG. 5 is a cross-sectional view of the radial biasing member according to line 4-4 of FIG. 4.
FIG. 6 is an isometric view of an exemplary rocker latch of an exemplary biased latch subassembly.
FIG. 7 is a cross-sectional view of the rocker latch according to line 7-7 of FIG. 6.
FIG. 8 is an isometric view of an exemplary axial biasing member of an exemplary biased latch subassembly.
FIG. 9 is a cross-sectional view of the axial biasing member according to line 9-9 of FIG. 8.
FIG. 10 is an isometric view of an exemplary latch actuator pull sleeve of an exemplary biased latch subassembly.
FIG. 11 is a cross-sectional view of the latch actuator pull sleeve according to line 11-11 of FIG. 10.
FIG. 12 is an isometric view of an exemplary rocker latch-engaging finger of an exemplary biased latch subassembly.
FIG. 13 is a cross-sectional view of the rocker latch-engaging finger according to line 13-13 of FIG. 12.
FIG. 14A is a side isometric view of the pod assembly of FIGS. 1A-1C showing an exemplary biased latch subassembly of the pod assembly arranged relative an exemplary indexing plate of the pod assembly in a latched, neutral orientation.
FIG. 14B is a side isometric view of the pod assembly of FIGS. 1A-1C showing an exemplary biased latch subassembly of the pod assembly arranged relative an exemplary indexing plate of the pod assembly in an unlatched, neutral orientation.
FIG. 14C is a side isometric view of the pod assembly of FIGS. 1A-1C showing an exemplary biased latch subassembly of the pod assembly arranged relative an exemplary indexing plate of the pod assembly in an unlatched, pivoted-from-neutral orientation.
FIG. 14D is a side isometric view of the pod assembly of FIGS. 1A-1C showing an exemplary biased latch subassembly of the pod assembly arranged relative an exemplary indexing plate of the pod assembly in a latched, pivoted-from-neutral orientation.
FIG. 15A is a cross-sectional view of the pod assembly according to line 15A-15A of FIG. 14.
FIG. 15B is a cross-sectional view of the pod assembly according to line 15B-15B of FIG. 14.
FIG. 15C is a cross-sectional view of the pod assembly according to line 15C-15C of FIG. 14.
FIG. 15D is a cross-sectional view of the pod assembly according to line 15D-15D of FIG. 14.
FIG. 16A is a front isometric view of an exemplary indexing plate of an exemplary leg indexing portion of an exemplary pod assembly.
FIG. 16B is a rear isometric view of the indexing plate of FIG. 16A.
FIG. 16C is a rear view of the indexing plate of FIG. 16A.
FIG. 17A is a cross-sectional view of the indexing plate according to line 17A-17A of FIG. 16A.
FIG. 17B is a cross-sectional view of the indexing plate according to line 17B-17B of FIG. 16B.
FIG. 17C is a cross-sectional view of the indexing plate according to line 17C-17CA of FIG. 16C.
FIG. 18A is an isometric view of an exemplary firearm implement system including an exemplary pod assembly attached to a mounting rail of firearm.
FIG. 18B is a front view of the firearm implement system of FIG. 18A.
FIG. 19A is an isometric view of an exemplary firearm implement system including an exemplary first pod assembly attached to a first mounting rail of a firearm and an exemplary second pod assembly attached to a second mounting rail of a firearm.
FIG. 19B is a front view of the firearm implement system of FIG. 19A.

Like reference symbols in the various drawings indicate like elements.

### DETAILED DESCRIPTION

Example configurations will now be described more fully with reference to the accompanying drawings. Example configurations are provided so that this disclosure will be thorough, and will fully convey the scope of the disclosure to those of ordinary skill in the art. Specific details are set forth such as examples of specific components, devices, and methods, to provide a thorough understanding of configurations of the present disclosure. It will be apparent to those of ordinary skill in the art that specific details need not be employed, that example configurations may be embodied in many different forms, and that the specific details and the example configurations should not be construed to limit the scope of the disclosure.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

When an element or layer is referred to as being "on," "engaged to," "connected to," "attached to," or "coupled to" another element or layer, it may be directly on, engaged, connected, attached, or coupled to the other element or layer, or intervening elements or layers may be present. In contrast, when an element is referred to as being "directly on," "directly engaged to," "directly connected to," "directly attached to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

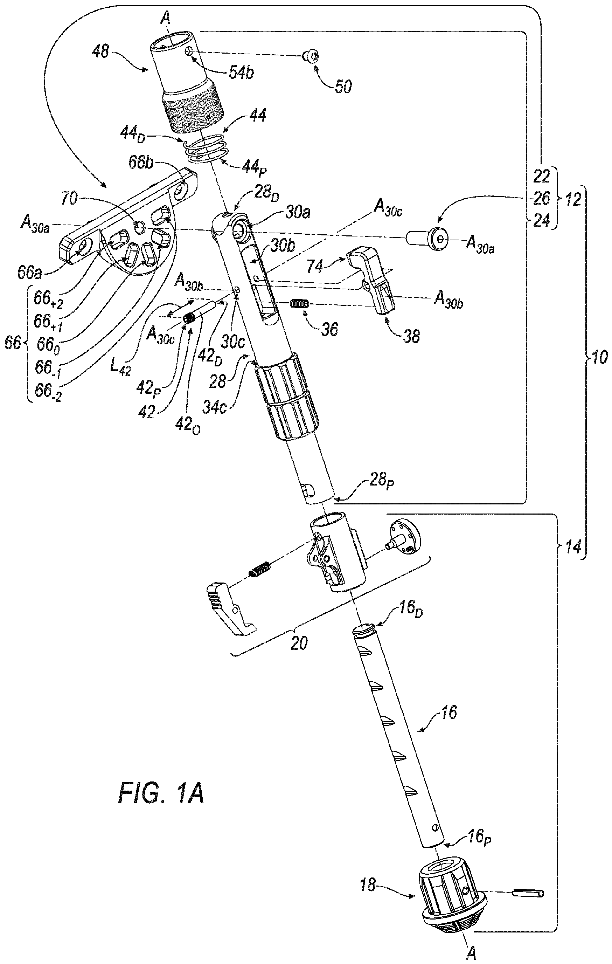

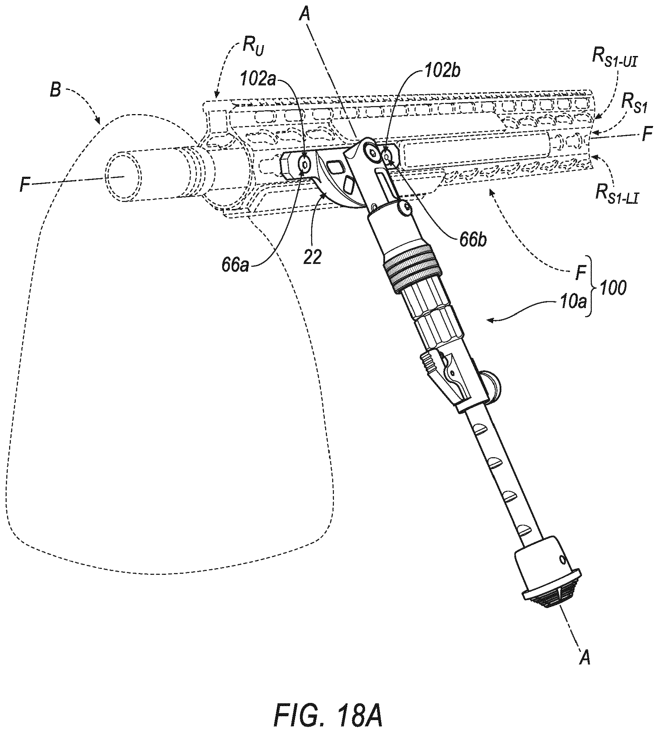

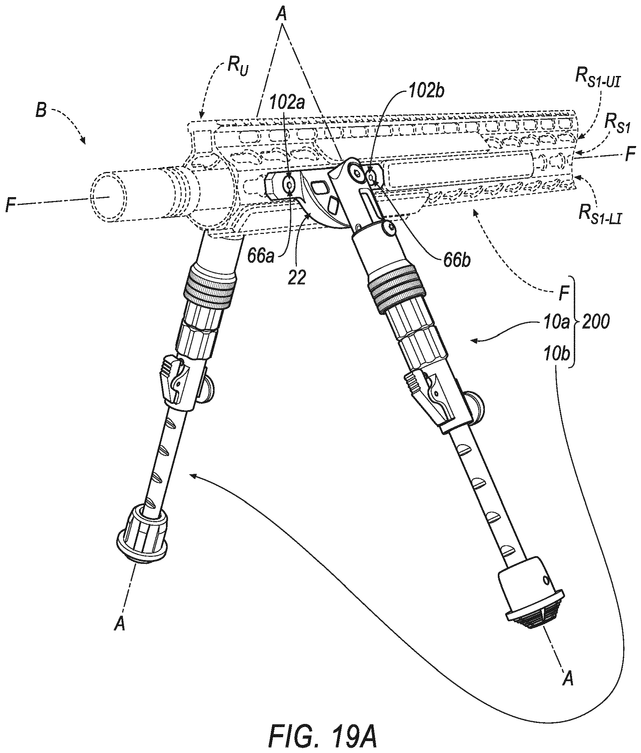

Referring to FIGS. 1A-1C, 14A-14D and 15A-15D, a pod assembly is shown generally at 10. Furthermore, as seen in FIGS. 18A-18B, a firearm implement system including a pod assembly 10a and a firearm F is shown generally at 100. Yet even further, as seen in FIGS. 19A-19B, a firearm implement system including a first pod assembly 10a, a second pod assembly 10b and a firearm F is shown generally at 200. The pod assembly 10a of the firearm implement system 100 and the first and second pod assemblies 10a, 10b of the firearm implement system 200 may be substantially similar to the pod assembly 10 of FIGS. 1A-1C, 14A-14D and 15A-15D.

Referring to FIGS. 1A-1C, the pod assembly 10 includes a leg indexing portion 12. The pod assembly 10 may optionally include a telescoping leg portion 14 connected to the leg indexing portion 12; because the leg indexing portion 12 can, in-of-itself, is shaped to be in the form of a leg or a support member for supporting a device (such as, e.g., a camera, firearm (F, as seen in, for example, FIGS. 18A-18B, 19A-19B) or the like), the telescoping leg portion 14 may operate to extend the leg shape of the leg indexing portion 12, and, as a result, the telescoping leg portion 14 is not a critical or essential component of the pod assembly 10.

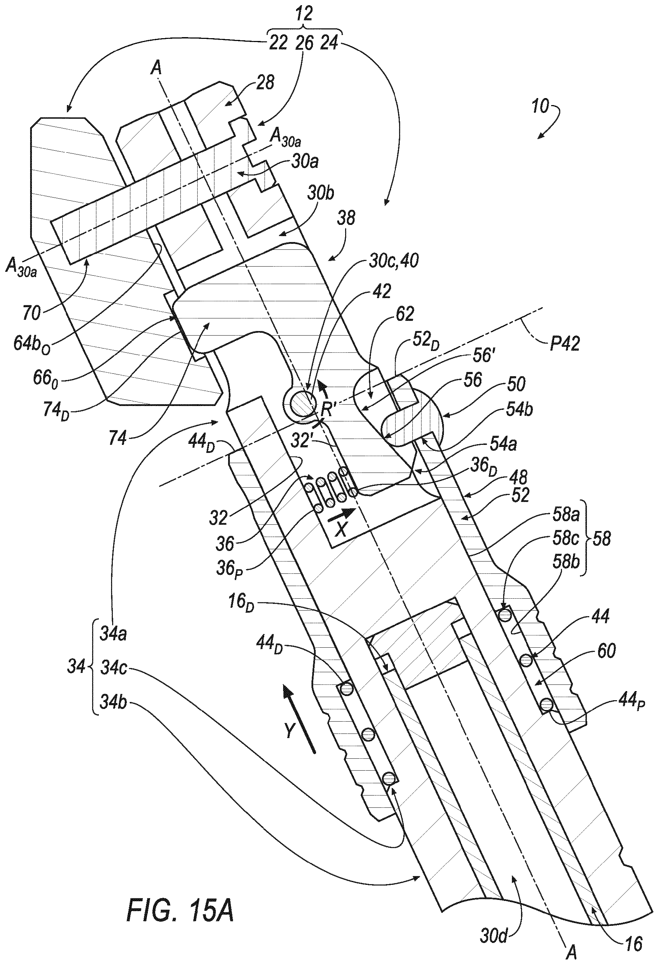

As seen in FIG. 1A, the telescoping leg portion 14 includes a shaft portion 16. At least a distal portion 16_{D} of the shaft portion 16 is adjustably-disposed within the leg indexing portion 12 (see, e.g., FIGS. 15A-15D). In an implementation, the shaft portion 16 is movably-disposed relative to the leg indexing portion 12 along an axis A-A that coaxially extends through both of the leg indexing portion 12 and the telescoping leg portion 14.

The telescoping leg portion 14 may further include a foot portion 18 that is attached to a proximal portion 16_{P} of the shaft portion 16. The telescoping leg portion 14 may further include a retainer portion 20 that selectively-retains the shaft portion 16 in a selectively-fixed orientation relative the leg indexing portion 12 after the shaft portion 16 has been selectively extended from the leg indexing portion 12 or selectively disposed within the leg indexing portion 12.

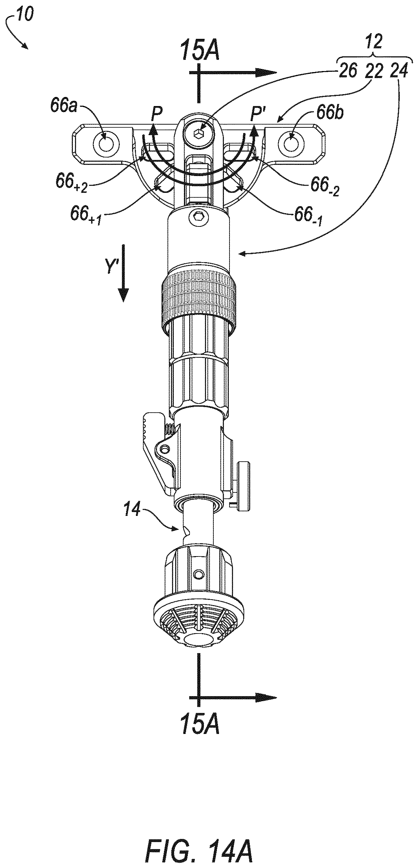

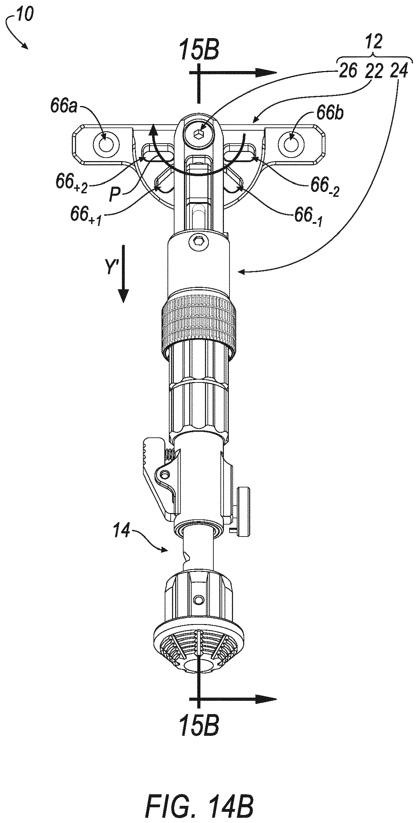

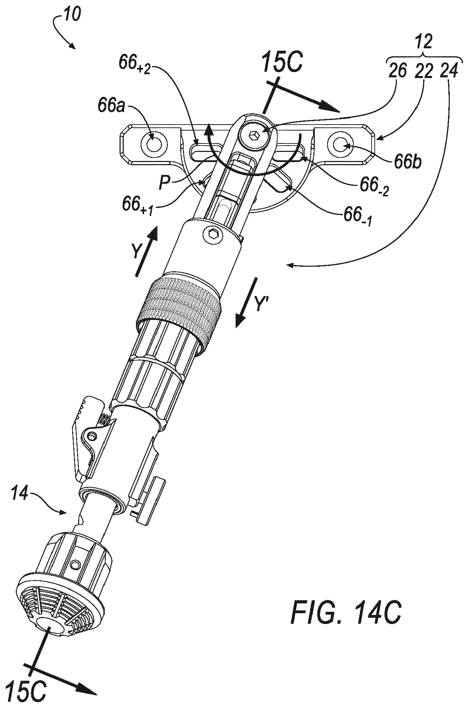

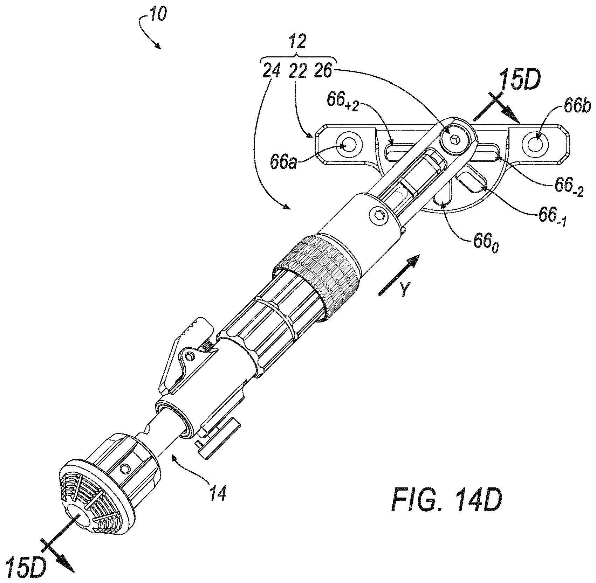

Referring to FIGS. 1A-1C, the leg indexing portion 12 includes an indexing plate 22 and a biased latch subassembly 24. The leg indexing portion 12 further includes a pivot pin 26 that pivotably-connects (see, e.g., arrows P / P' in FIGS. 14A-14D) the biased latch subassembly 24 to the indexing plate 22.

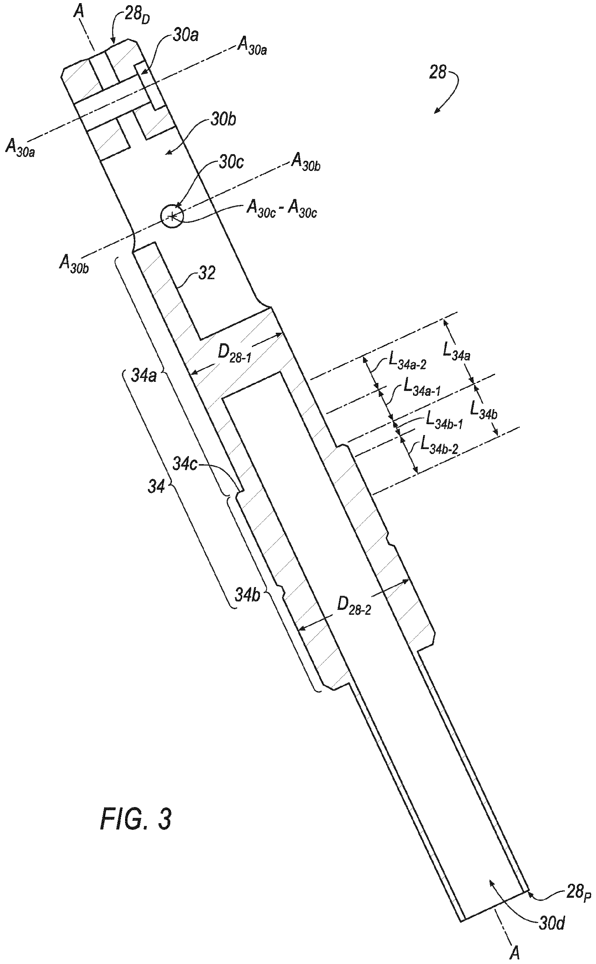

With reference to FIGS. 1A-1C, 2 and 3, the biased latch subassembly 24 includes a shaft body 28. With reference to FIGS. 1A and 2-3, the shaft body 28 defines: a pivot-pin-receiving passage 30a, a rocker-latch-receiving passage 30b, at least one (e.g. a pair of) latch pin-receiving passage(s) 30c and a telescoping-leg-portion-receiving passage 30d (see, e.g., FIG. 3).

Referring to FIG. 3, the pivot-pin-receiving passage 30a radially extends through the shaft body 28 (relative to the axis A-A) proximate a distal end 28_{D} of the shaft body 28. The rocker-latch-receiving passage 30b radially extends (see, e.g., axis A_{30b}-A_{30b}) through the shaft body 28 (relative to the axis A-A) proximate the distal end 28_{D} of the shaft body 28 but nearer to a proximal end 28_{P} of the shaft body 28 with respect to the pivot-pin-receiving passage 30a.

With further reference to FIG. 3, the pair of latch pin-receiving passages 30c radially extends (see, e.g., axis A_{30c}-A_{30c}) through the shaft body 28 (relative to the axis A-A) proximate the distal end 28_{D} of the shaft body 28 but nearer to the proximal end 28_{P} of the shaft body 28 with respect to the pivot-pin-receiving passage 30a. Furthermore, as seen in FIGS. 1A, 2 and 3, the pair of latch pin-receiving passages 30c radially traverses and is in fluid communication with the rocker-latch-receiving passage 30b. The pair of latch pin-receiving passages 30c are radially offset from the rocker-latch-receiving passage 30b by approximately 180° (see, e.g., axis A_{30c}-A_{30c} extending through the pair of latch pin-receiving passages 30c compared to axis A_{30b}-A_{30b} extending through the rocker-latch-receiving passage 30b).

As seen in FIG. 3, the telescoping-leg-portion-receiving passage 30d partially axially extends into the shaft body 28 from the proximal end 28_{P} of the shaft body 28 along the axis A-A. Furthermore, the telescoping-leg-portion-receiving passage 30d extends toward but not all the way to the distal end 28_{D} of the shaft body 28. Yet even further, the telescoping-leg-portion-receiving passage 30d extends toward the distal end 28_{D} of the shaft body 28 but not past the rocker-latch-receiving passage 30b, which is nearest to the proximal end 28_{P} of the shaft body 28 with respect to the pivot-pin-receiving passage 30a and the pair of latch pin-receiving passages 30c.

With continued reference to FIG. 3, the rocker-latch-receiving passage 30b may be defined an inner surface 32. The inner surface 32 of the rocker-latch-receiving passage 30b may be alternatively referred to as a radial biasing member engagement surface.

As seen in FIG. 3, the shaft body 28 may be further defined by an outer surface portion 34. In an example, the outer surface portion 34 may be defined by at least: a first axial surface portion 34a, a second axial surface portion 34b and a radial surface portion 34c that connects the first axial surface portion 34a to the second axial surface portion 34b. The radial surface portion 34c may be alternatively referred to as an axial biasing member engagement surface.

Some of a length of the first axial surface portion 34a may be defined by a length portion L₃₄ₐ including a first length portion segment L₃₄ₐ₋₁ that extends axially away from the axial biasing member engagement surface 34c and a second length portion segment L₃₄ₐ₋₂ that extends axially away from the first length portion segment L₃₄ₐ₋₁. Some of a length of the second axial surface portion 34b may be defined by a length portion L_{34b} including a first length portion segment L_{34b-1} that extends axially away from the axial biasing member engagement surface 34c and a second length portion segment L_{34b-2} that extends axially away from the first length portion segment L_{34b-1}.

At least some of the first axial surface portion 34a of the outer surface portion 34 may define a first outer diameter D₂₈₋₁ of the shaft body 28. At least some of the second axial surface portion 34b of the outer surface portion 34 may define a second outer diameter D₂₈₋₂ of the shaft body 28. The second outer diameter D₂₈₋₂ may be greater than the first outer diameter D₂₈₋₁.

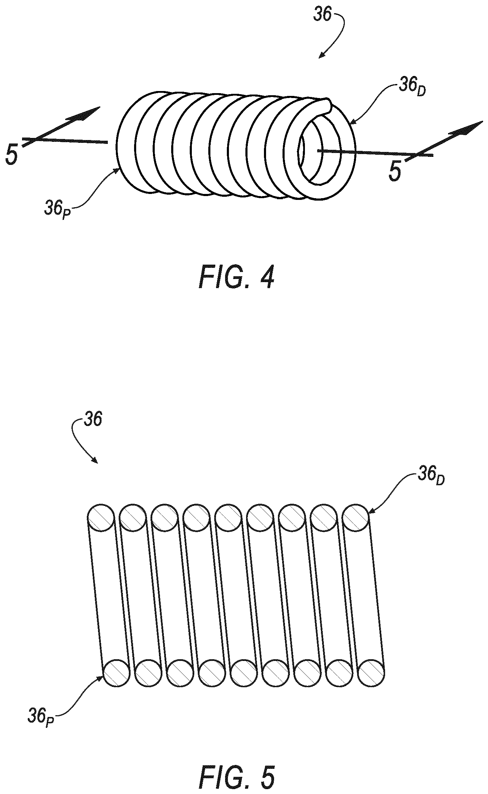

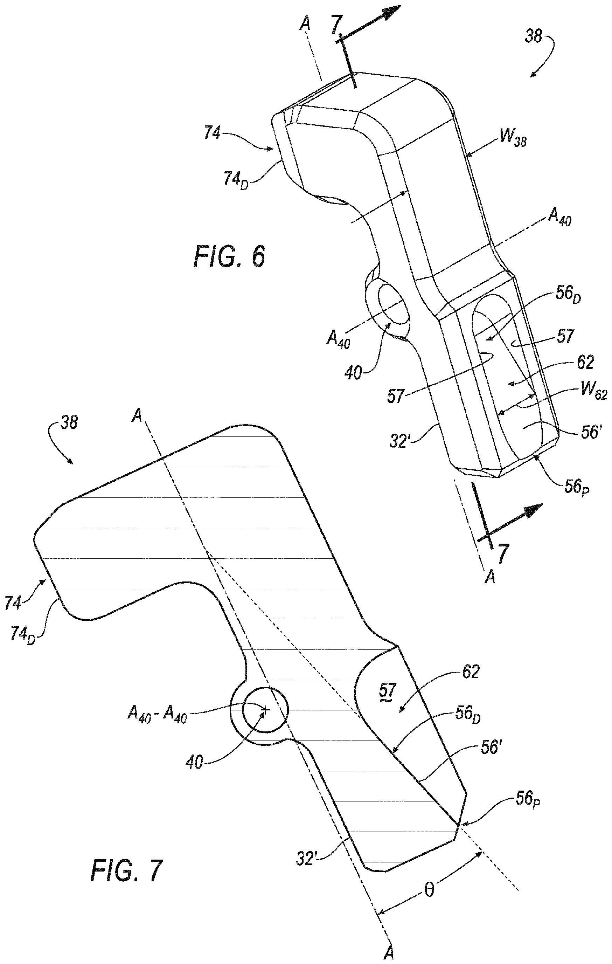

With reference to FIGS. 1A, 4-5 and 6-7, the biased latch subassembly 24 further includes a radial biasing member 36 (see, e.g., FIGS. 4-5) and a rocker latch 38 (see, e.g., FIGS. 6-7). The radial biasing member 36 and the rocker latch 38 are disposed within the rocker-latch-receiving passage 30b of the shaft body 28 (see, e.g., FIGS. 15A-15D).

Referring to FIGS. 4-5, the radial biasing member 36 may be a coil spring. The radial biasing member 36 may be defined by a proximal end 36_{P} and a distal end 36_{D}.

Referring to FIGS. 6-7, the rocker latch 38 may define a latch pin-receiving passage 40 extending through a width W₃₈ (see, e.g., FIG. 6) of the rocker latch 38. An axis A₄₀-A₄₀ (see, e.g., FIG. 6) extends through the latch pin-receiving passage 40 of the rocker latch 38. Upon disposing the rocker latch 38 within the rocker-latch-receiving passage 30b (see, e.g., FIG. 15A-15D), the axis A₄₀-A₄₀ extending through the latch pin-receiving passage 40 of the rocker latch 38 is co-axially aligned with the axis A_{30c}-A_{30c} extending through the pair of latch pin-receiving passages 30c of the shaft body 28.

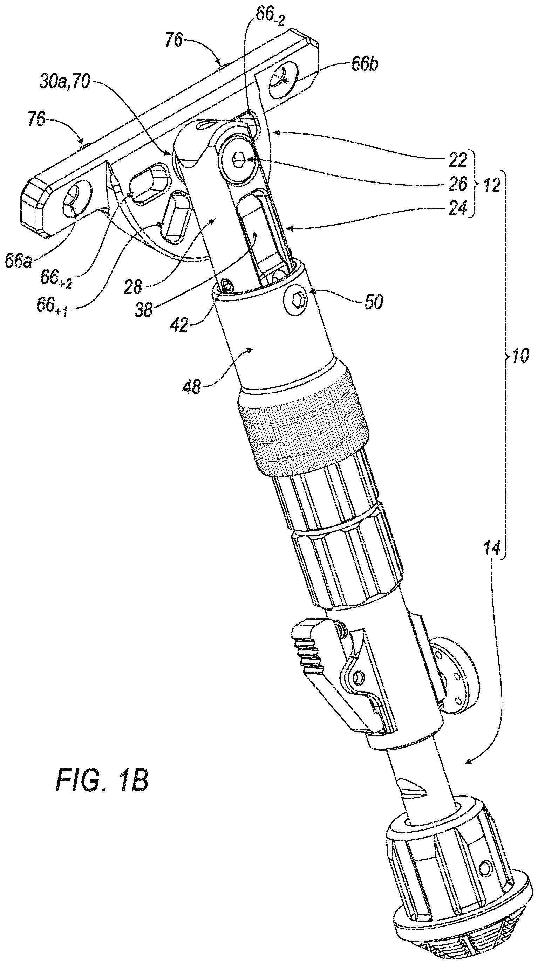

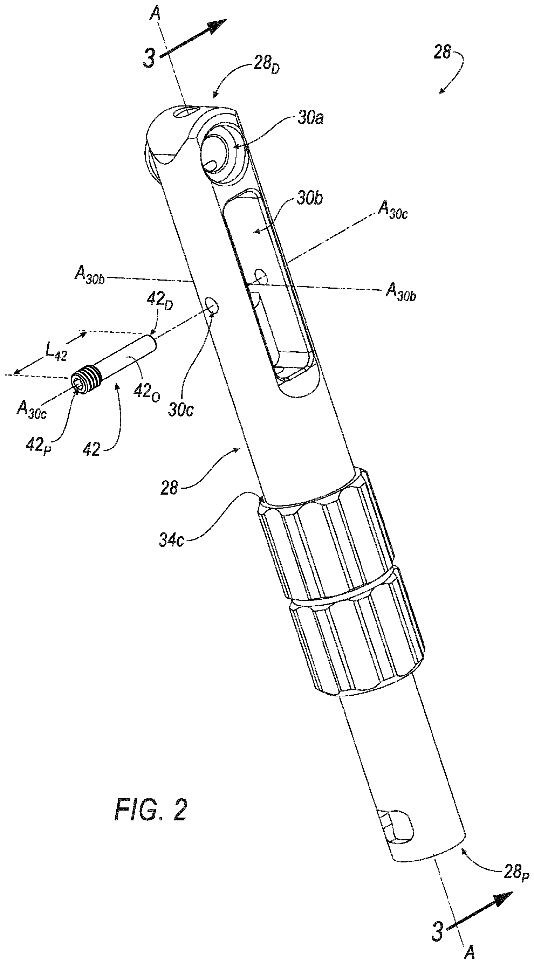

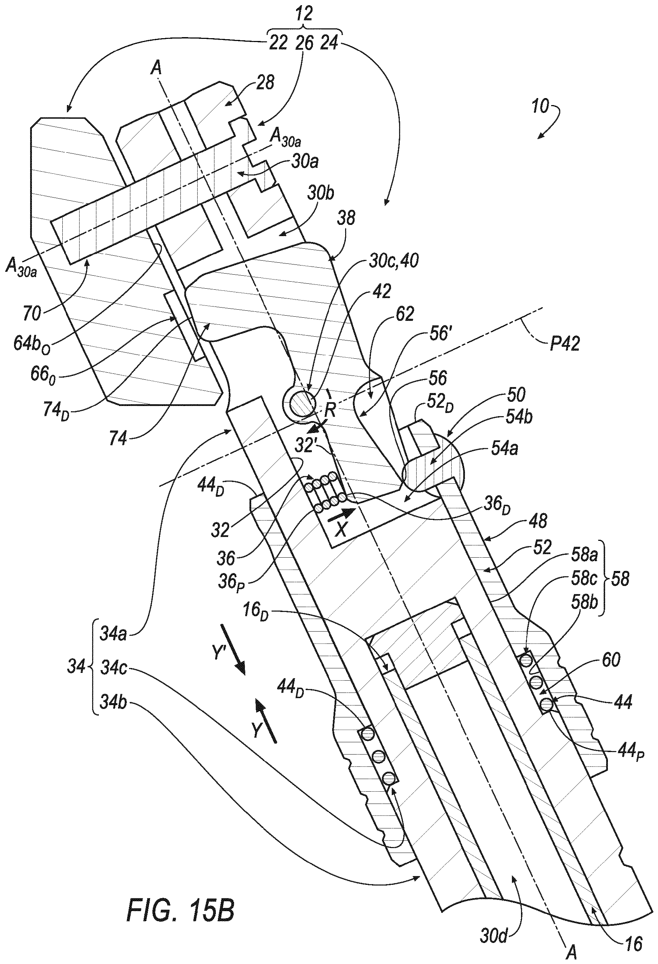

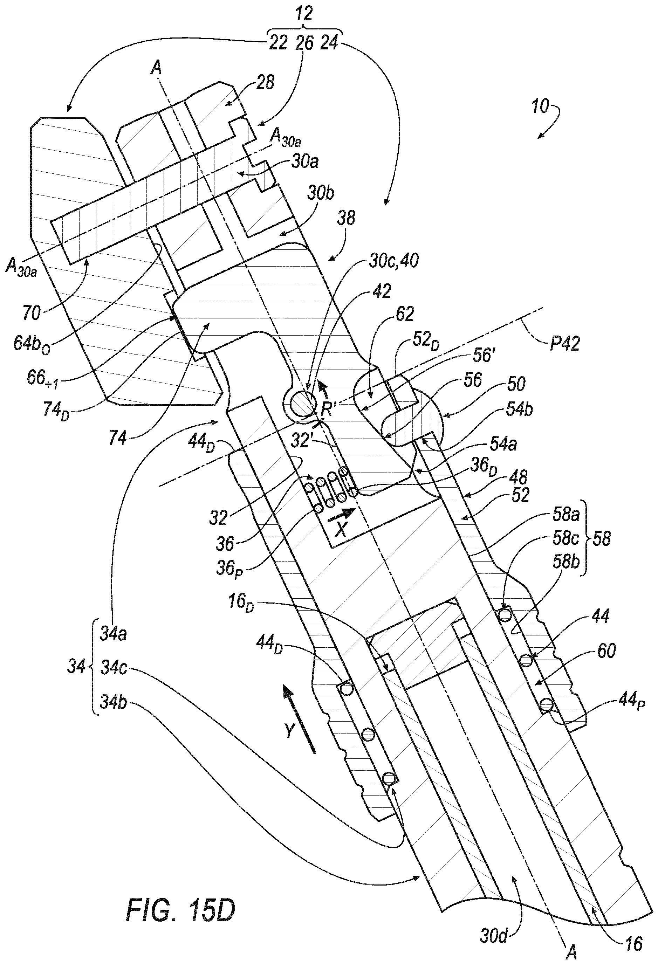

Referring to FIGS. 1A and 2, the biased latch subassembly 24 further includes a latch pin 42. As seen in FIG. 1A, the latch pin 42 is aligned with the axis A_{30c}-A_{30c} (see also, e.g., FIG. 2) extending through the pair of latch pin-receiving passages 30c of the shaft body 28 and the axis A₄₀-A₄₀ extending through the latch pin-receiving passage 40 of the rocker latch 38. The latch pin 42 is disposed within is the pair of latch pin-receiving passages 30c of the shaft body 28 and the latch pin-receiving passage 40 of the rocker latch 38 (as seen in FIGS. 1B-1C) for rotatably-connecting R (see, e.g., FIG. 15B) / R' (see, e.g., FIG. 15D) the rocker latch 38 to the shaft body 28.

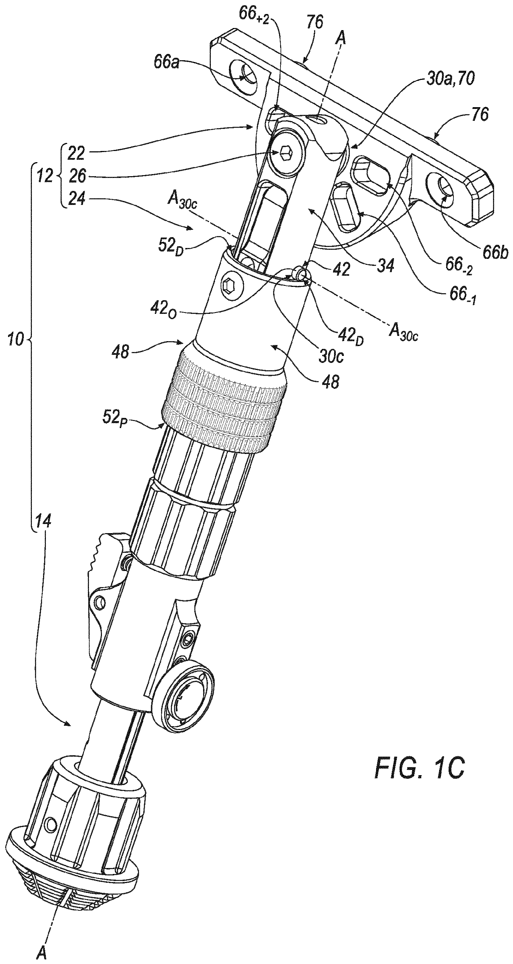

As seen in FIGS. 1A and 2, the latch pin 42 includes a proximal end 42_{P} and a distal end 42_{D}. The latch pin 42 is defined by a length L₄₂ extending between the proximal end 42_{P} of the latch pin 42 and the distal end 42_{D} of the latch pin 42. The length L₄₂ of latch pin 42 may be greater than the first outer diameter D₂₈₋₁ defined by the first axial surface portion 34a of the shaft body 28 such that when the latch pin 42 is disposed within the pair of latch pin-receiving passages 30c of the shaft body 28, at least, for example the distal end 42_{D} of the latch pin 42 extends radially beyond the outer surface portion 34 of the shaft body 28 (as seen in, e.g., FIG. 1C) in order to permit a distal end 52_{D} of a sleeve body 52 of a latch actuator pull sleeve 48 to be biased into and disposed adjacent an outer surface portion 42o (see also, e.g., FIGS. 1A, 1C and 2) of the latch pin 42.

With reference to FIGS. 15A-15D, prior to rotatably-securing R / R' the rocker latch 38 to the shaft body 28 by way of the latch pin 42 as described above, the radial biasing member 36 is arranged within the rocker-latch-receiving passage 30b of the shaft body 28. In an example, the radial biasing member 36 is arranged between the radial biasing member engagement surface 32 of the rocker-latch-receiving passage 30b and a radial-outwardly-urging surface 32' (see also, e.g., FIG. 7) of the rocker latch 38 such that the proximal end 36_{P} of radial biasing member 36 is disposed adjacent the radial biasing member engagement surface 32 of the rocker-latch-receiving passage 30b and the distal end 36_{D} of radial biasing member 36 is disposed adjacent the radial-outwardly-urging surface 32' of the rocker latch 38.

As seen in FIGS. 1A, 3 and 15A-15D, the shaft portion 16 of the telescoping leg portion 14 is aligned with the axis A-A extending through the telescoping-leg-portion-receiving passage 30d of the shaft body 28 of the leg indexing portion 12. Furthermore, as seen in FIGS. 15A-15D, the shaft portion 16 of the telescoping leg portion 14 is disposed within the telescoping-leg-portion-receiving passage 30d of the shaft body 28 of the leg indexing portion 12 for telescopingly-connecting the shaft portion 16 of the telescoping leg portion 14 to the shaft body 28 of the leg indexing portion 12. The shaft portion 16 of the telescoping leg portion 14 may be slidably-adjusted into and out of the telescoping-leg-portion-receiving passage 30d of the shaft body 28 of the leg indexing portion 12 and selectively-fixed in any desirable retracted or extended position by engaging or disengaging the retainer portion 20 of the telescoping leg portion 14.

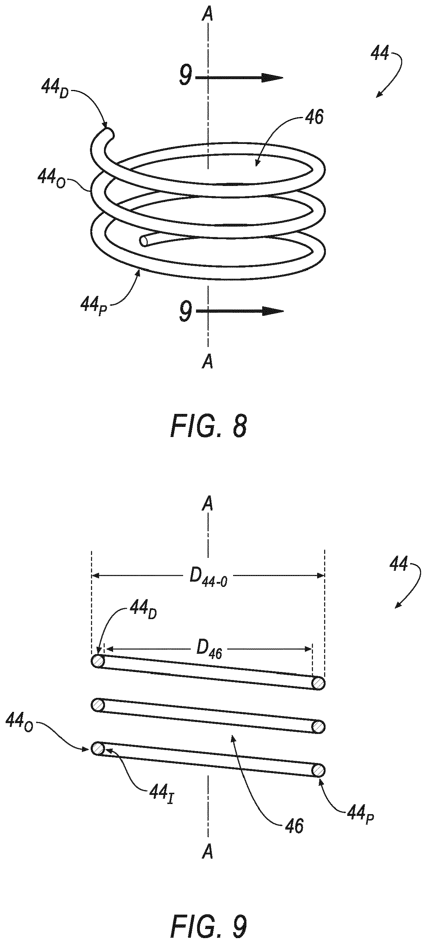

With reference to FIGS. 1A and 8-9, the biased latch subassembly 24 further includes an axial biasing member 44. In an example, the axial biasing member 44 may be a coil spring having a proximal surface 44_{P}, a distal surface 44_{D}, an inner surface 44_{I} (see, e.g., FIG. 9) and an outer surface 44o. The inner surface 44_{I} of the axial biasing member 44 defines a passage 46 extending through the axial biasing member 44 between the proximal surface 44p and the distal surface 44_{D}. The inner surface 44_{I} of the axial biasing member 44 also defines a passage diameter D₄₆ of the passage 46. The outer surface 44o of the axial biasing member 44 defines an outer diameter D_{44-O} of the axial biasing member 44.

With reference to FIGS. 3, 9 and 15A-15D, in an example, the passage diameter D₄₆ of the passage 46 of the axial biasing member 44 is approximately equal to but slightly greater than the first outer diameter D₂₈₋₁ defined by the first axial surface portion 34a of the outer surface portion 34 of the shaft body 28; furthermore, the outer diameter D_{44-O} of the axial biasing member 44 is approximately equal to but slightly less than the second outer diameter D₂₈₋₂ defined by the second axial surface portion 34b of the outer surface portion 34 of the shaft body 28. As a result of the exemplary corresponding dimensions described above, as seen in FIG. 1A, the axial biasing member 44 is co-axially aligned with the axis A-A, and the proximal surface 44_{P} of the axial biasing member 44 is arranged opposite the axial biasing member engagement surface 34c of the outer surface portion 34 of the shaft body 28. Thereafter, as seen in FIGS. 15A-15D, the distal end 28_{D} of the shaft body 28 is inserted through passage 46 of the axial biasing member 44 such that the inner surface 44_{I} of the axial biasing member 44 is arranged opposite some of the first axial surface portion 34a of the outer surface portion 34 of the shaft body 28 and the proximal surface 44_{P} of the axial biasing member 44 is arranged adjacent and supported by the axial biasing member engagement surface 34c of the outer surface portion 34 of the shaft body 28.

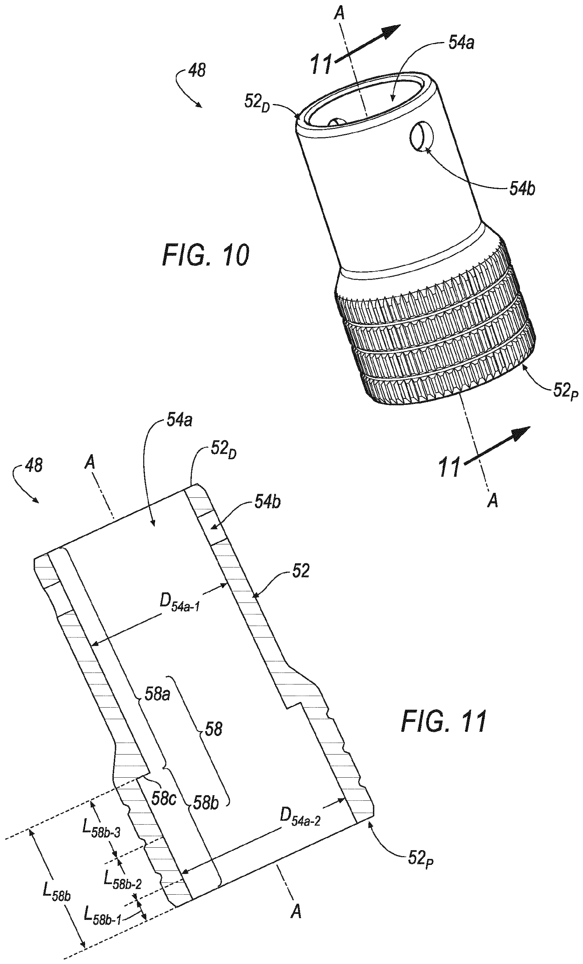

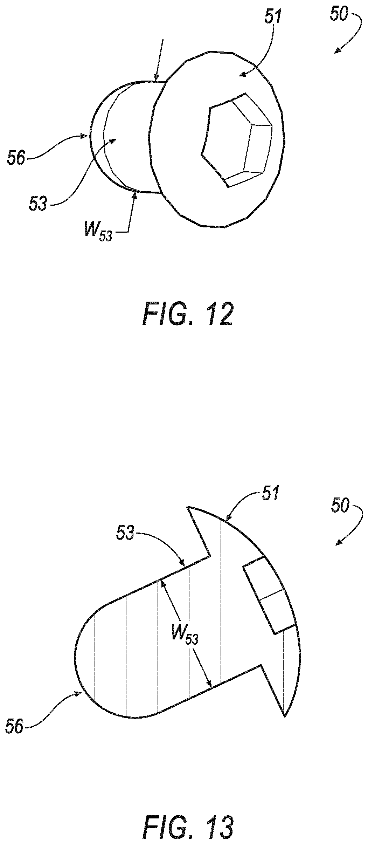

With reference to FIGS. 1A, 10-11 and 12-13, the biased latch subassembly 24 further includes a latch actuator pull sleeve 48 (see, e.g., FIGS. 10-11) and rocker latch-engaging finger 50 (see, e.g., FIGS. 12-13). The rocker latch-engaging finger 50 includes a head portion 51 and a stem portion 53. Referring to FIG. 11, the latch actuator pull sleeve 48 includes a sleeve body 52 defining an axial passage 54a and a radial passage 54b that is in fluid communication with the axial passage 54a; furthermore, as seen in FIGS. 15A-15D, the radial passage 54b is also in fluid communication with the rocker-latch-receiving passage 30b when the latch actuator pull sleeve 48 is arranged about the shaft body 28.

As seen in FIGS. 15A-15D, the shaft body 28 is arranged within the axial passage 54a and a portion of the stem portion 53 rocker latch-engaging finger 50 extends through the radial passage 54b and into the rocker-latch-receiving passage 30b of the shaft body 28 as a result of the latch actuator pull sleeve 48 circumscribing a portion of the rocker-latch-receiving passage 30b of the shaft body 28. Furthermore, a portion of the length of the latch actuator pull sleeve 48 including the radial passage 54b that retains the portion of the stem portion 53 of the rocker latch-engaging finger 50 circumscribes a portion of the rocker-latch-receiving passage 30b of the shaft body 28 such that a rocker-latch-engaging surface 56 (see also, e.g., FIGS. 12-13) of the stem portion 53 of the rocker latch-engaging finger 50 is permitted to be disposed adjacent and slidably-engage a radial-inwardly-urging surface 56' (see also, e.g., FIG. 7) of the rocker latch 38. The radial-inwardly-urging surface 56' is generally defined as having a proximal end 56_{P} (see, e.g., FIGS. 6-7) and a distal end 56_{D} (see, e.g., FIGS. 6-7).

Referring to FIG. 11, the sleeve body 52 may be further defined by an inner surface 58 that defines the axial passage 54a. In an example, the inner surface 58 may be defined by at least: a first axial surface portion 58a, a second axial surface portion 58b and a radial surface portion 58c that connects the first axial surface portion 58a to the second axial surface portion 58b. The radial surface portion 58c may be alternatively referred to as an axial biasing member urging surface.

The second axial surface portion 58b may be defined by a length portion L_{58b} including a first length portion segment L_{58b-1}, a second length portion segment L_{58b-2} and a third length portion segment L_{58b-3}. The first length portion segment L_{58b-1} extends axially away from a proximal end 52_{P} of the sleeve body 52. The second length portion segment L_{58b-2} extends axially away from the first length portion segment L_{58b-1} and is arranged axially between the first length portion segment L_{58b-1} and the third length portion segment L_{58b-3}. The third length portion segment L_{58b-3} extends axially away from the second length portion segment L_{58b-2} and is arranged axially between the second length portion segment L_{58b-2} and the axial biasing member urging surface 58c.

The first axial surface portion 58a of the inner surface 58 may define a first passage diameter D₅₄ₐ₋₁ of the axial passage 54a. The second axial surface portion 58b of the inner surface 58 may define a second passage diameter D₅₄ₐ₋₂ of the axial passage 54a. The second passage diameter D₅₄ₐ₋₂ may be greater than the first passage diameter D₅₄ₐ₋₁.

With reference to FIGS. 3 and 11, in an example, the first passage diameter D₅₄ₐ₋₁ of the axial passage 54a defined by the inner surface 58 of the sleeve body 52 is approximately equal to but slightly greater than the first outer diameter D₂₈₋₁ defined by the first axial surface portion 34a of the shaft body 28. Furthermore, the second passage diameter D₅₄ₐ₋₂ of the axial passage 54a defined by the inner surface 58 of the sleeve body 52 is approximately equal to but slightly greater than the second outer diameter D₂₈₋₂ defined by the second axial surface portion 34b of the shaft body 28.

As seen in FIGS. 1A and 15A-15D, as a result of the exemplary corresponding dimensions described above, the latch actuator pull sleeve 48 is aligned with the axis A-A, and the axial biasing member urging surface 58c of the inner surface 58 of the sleeve body 52 of the latch actuator pull sleeve 48 is arranged opposite the distal surface 44_{D} of the axial biasing member 44. Thereafter, with reference to FIGS. 3, 11 and 15A-15D, the distal end 28_{D} of the shaft body 28 is inserted through axial passage 54a defined by the inner surface 58 of the sleeve body 52 of the latch actuator pull sleeve 48 for arranging the inner surface 58 of the sleeve body 52 about the outer surface portion 34 of the shaft body 28 such that: (1) the first length portion segment L_{58b-1} of the length portion L_{58b} of the second axial surface portion 58b of the inner surface 58 of the sleeve body 52 is arranged opposite the first length portion segment L_{34b-1} of the length portion L_{34b} of the second axial surface portion 34b of the shaft body 28, (2) the second and third length portion segments L_{58b-2}, L_{58b-3} of the length portion L_{58b} of the second axial surface portion 58b of the inner surface 58 of the sleeve body 52 is arranged opposite the first and second length portion segments L₃₄ₐ₋₁, L₃₄ₐ₋₂ of the length portion L₃₄ₐ of the first axial surface portion 34a of the shaft body 28, and (3) the axial biasing member urging surface 58c of the inner surface 58 of the sleeve body 52 of the latch actuator pull sleeve 48 is disposed adjacent the distal surface 44_{D} of the axial biasing member 44 while the proximal surface 44_{P} of the axial biasing member 44 is disposed adjacent the axial biasing member engagement surface 34c for axially retaining the axial biasing member 44 between the latch actuator pull sleeve 48 and the shaft body 28.

With reference to FIGS. 15A-15D, as a result of the arrangement of the latch actuator pull sleeve 48 relative the shaft body 28 and the axial biasing member 44 described above, an axial biasing member cavity 60 is defined by: (1) the second and third length portion segments L_{58b-2}, L_{58b-3} of the length portion L_{58b} of the second axial surface portion 58b of the inner surface 58 of the sleeve body 52 being arranged radially opposite the first and second length portion segments L₃₄ₐ₋₁, L₃₄ₐ₋₂ of the length portion L₃₄ₐ of the first axial surface portion 34a of the shaft body 28 and (2) the axial biasing member engagement surface 34c of the shaft body 28 being arranged axially opposite the axial biasing member urging surface 58c of the inner surface 58 of the sleeve body 52 of the latch actuator pull sleeve 48. The axial biasing member cavity 60 thereby provides a pair of axially opposite surfaces (see, e.g., surfaces 34c, 58c) and a pair of radially opposite surfaces (see, e.g., portions of surfaces 34a, 58b) that axially and radially retains the axial biasing member 44 between shaft body 28 and the sleeve body 52.

As seen in FIGS. 15A-15D, the latch pin 42 is disposed within is the pair of latch pin-receiving passages 30c of the shaft body 28 and the latch pin-receiving passage 40 of the rocker latch 38 after the sleeve body 52 has been arranged relative the shaft body 28 as described above. As a result of the axial biasing member 44 being axially retained within the axial biasing member cavity 60 as described above, the axial biasing member axially urges Y (see, e.g., FIGS. 15A-15D) a distal end 52_{D} (see also, e.g., FIG. 11) of the sleeve body 52 adjacent the outer surface 42o of the latch pin 42 (as seen in FIG. 1C and referenced at a plane P42 defined by a dashed line in FIGS. 15A-15D extending across the outer surface 42o of the latch pin 42) as a result of, for example, the distal end 42_{D} of the latch pin 42 extending radially beyond the outer surface portion 34 of the shaft body 28 for axially-retaining the sleeve body 52 of the latch actuator pull sleeve 48 between: (1) the outer surface 42o of the latch pin 42 and the distal surface 44_{D} of the axial biasing member 44.

With reference to FIGS. 15A-15D, in conjunction with the axial bias Y imparted to the sleeve body 52 by the axial biasing member 44 as described above, the distal end 36_{D} of radial biasing member 36 is disposed adjacent the radial-outwardly-urging surface 32' of the rocker latch 38 for imparting a radially-outwardly bias X to the rocker latch 38 such that the rocker-latch-engaging surface 56 of the rocker latch-engaging finger 50 is disposed adjacent (for slidable engagement with) the radial-inwardly-urging surface 56' of the rocker latch 38. Furthermore, as also seen in FIGS. 6-7, the rocker latch 38 may define a stem portion-receiving channel 62 defined by the radial-inwardly-urging surface 56' and a pair of opposing channel sidewall surfaces 57. The stem portion 53 of the rocker latch-engaging finger 50 may be defined by a width W₅₃ (see, e.g., FIGS. 12-13) that is substantially similar to but less than a width W₆₂ (see, e.g., FIG. 6) of the stem portion-receiving channel 62; as a result of the relative widths W₅₃, W₆₂ of the stem portion 53 of the rocker latch-engaging finger 50 and the stem portion-receiving channel 62, the stem portion 53 of the rocker latch-engaging finger 50 may be slidably-retained adjacent the rocker latch 38 for slidable movement between the proximal end 56_{P} of the radial-inwardly-urging surface 56' and the distal end 56_{D} of the radial-inwardly-urging surface 56'.

As seen in FIGS. 7 and 15A-15D, the radial-inwardly-urging surface 56' of the rocker latch 38 defines a ramp surface that progressively projects radially outwardly at a ramp angle θ (see, e.g., FIG. 7) relative to the axis A-A that coaxially extends through both of the leg indexing portion 12 and the telescoping leg portion 14 as the radial-inwardly-urging surface 56' extends from, for example, the distal end 56_{D} to the proximal end 56_{P}. In an example, the ramp angle θ may be approximately equal to 15°.

Because the rocker latch-engaging finger 50 is radially fixed within the radial passage 54b of the sleeve body 52 of the latch actuator pull sleeve 48 against the ramp surface / radial-inwardly-urging surface 56' and because the radial biasing member 36 imparts the radially-outwardly bias X to the rocker latch 38, when the latch actuator pull sleeve 48 is pulled downwardly Y' (see, e.g., FIGS. 15B-15C) toward the proximal end 28_{P} of the shaft body 28, the latch-engaging finger 50 remains disposed adjacent the ramp surface / radial-inwardly-urging surface 56' and urges rotation R (see, e.g., FIG. 15B) of the rocker latch 38 about the latch pin 42, thereby overcoming the radially-outward bias X imparted by the radial biasing member 36 as the rocker latch-engaging finger 50 slides along the ramp surface / radial-inwardly-urging surface 56' in the direction from the distal end 56_{D} to the proximal end 56_{P} according to the arrow Y'. Furthermore, when the latch actuator pull sleeve 48 is pulled downwardly Y' toward the proximal end 28_{P} of the shaft body 28, the axial bias Y imparted to the sleeve body 52 is overcome, thereby causing the axial biasing member 44 to be compressed between the axial biasing member engagement surface 34c and the axial biasing member urging surface 58c defining the axial biasing member cavity 60.

Furthermore, as seen in FIGS. 15B-15C, when the axial biasing member 44 is compressed as described above, the axial biasing member cavity 60 is no longer defined by the second and third length portion segments L_{58b-2}, L_{58b-3} of the length portion L_{58b} of the second axial surface portion 58b of the inner surface 58 of the sleeve body 52 being arranged radially opposite the first and second length portion segments L₃₄ₐ₋₁, L₃₄ₐ₋₂ of the length portion L₃₄ₐ of the first axial surface portion 34a of the shaft body 28. Conversely, with reference to FIGS. 3 and 11, the modified axial orientation of the latch actuator pull sleeve 48 related to the shaft body 28 as seen in FIGS. 15B-15C results in an axial dimension component of the axial biasing member cavity 60 being reduced such that the axial dimension component of the axial biasing member cavity 60 is defined by the third length portion segment L_{58b-3} of the length portion L_{58b} of the second axial surface portion 58b of the inner surface 58 of the sleeve body 52 being arranged radially opposite the second length portion segment L₃₄ₐ₋₂ of the length portion L₃₄ₐ of the first axial surface portion 34a of the shaft body 28.

With reference to FIGS. 15A and 15D, when the latch actuator pull sleeve 48 is not pulled downwardly Y' toward the proximal end 28_{P} of the shaft body 28, the axial bias Y of the axial biasing member 44 urges the sleeve body 52 upwardly (see direction of the axial bias arrow Y) toward the distal end 28_{D} of the shaft body 28 until the distal end 52_{D} of the sleeve body 52 is disposed adjacent the outer surface 42o of the latch pin 42 (as seen in FIG. 1C) as a result of, for example, the distal end 42_{D} of the latch pin 42 extending radially beyond the outer surface portion 34 of the shaft body 28. Correspondingly, the latch-engaging finger 50 remains disposed adjacent the ramp surface 56' and slides upwardly (see direction of the axial bias arrow Y from the proximal end 56_{P} to the distal end 56_{D}) with the sleeve body 52. When the axial orientation of the latch actuator pull sleeve 48 related to the shaft body 28 changes from a pulled down orientation Y' to an upwardly-urged orientation Y, the latch-engaging finger 50 slides upwardly Y with the sleeve body 52 from the proximal end 56_{P} of the ramp surface 56' to the distal end 56_{D} of the ramp surface 56', the radially-outward bias X imparted by the radial biasing member 36 causes the rocker latch 38 to rotate R' (see, e.g., FIG. 15D) in a direction opposite the rotate R about the latch pin 42.

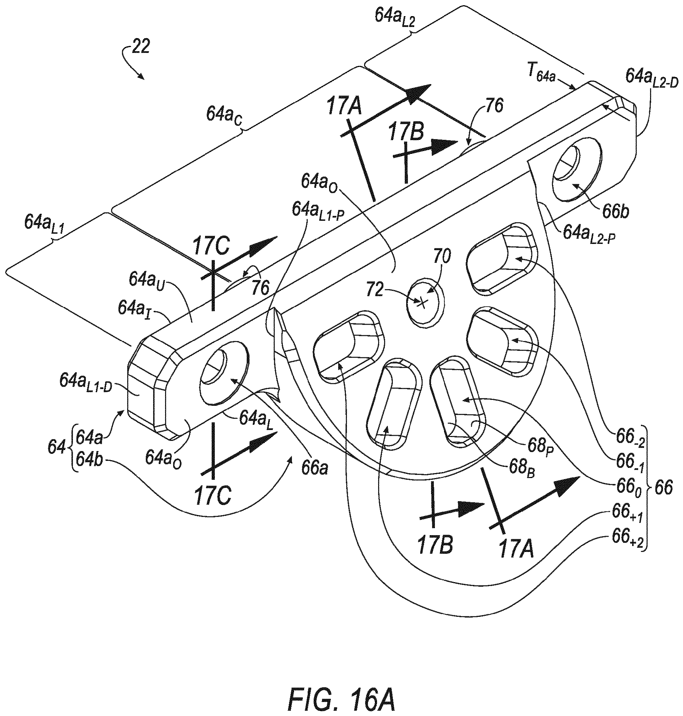

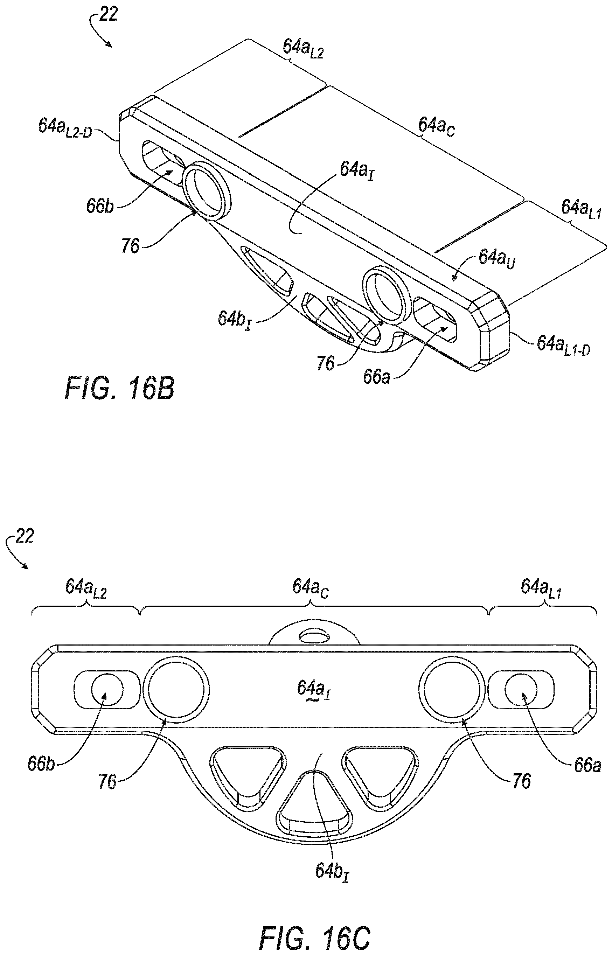

Referring to FIGS. 1A, 16A-16C, 17A-17C, the indexing plate 22 may include a plate body 64. As seen in FIG. 16A, the plate body 64 may generally define a firearm-engaging body portion 64a and a biased latch subassembly-engaging body portion 64b.

The firearm-engaging body portion 64a includes an inner surface 64a_{I}, an outer surface 64ao, an upper surface 64au and a lower surface 64a_{L}. The firearm-engaging body portion 64a may be further defined by a thickness T₆₄ₐ extending between the inner surface 64a_{I} and the outer surface 64ao.

The firearm-engaging body portion 64a may be further defined by a central body portion 64ac, a first lateral body portion 64a_{L1} and a second lateral body portion 64a_{L2}. The first lateral body portion 64a_{L1} may be defined as having a proximal end 64a_{L1-P} and a distal end 64a_{L1-D}. The second lateral body portion 64a_{L2} may be defined as having a proximal end 64a_{L2-P} and a distal end 64a_{L2-D}. The central body portion 64ac extends between the proximal end 64a_{L1-P} of the first lateral body portion 64a_{L1} and the proximal end 64a_{L2-P} of the second lateral body portion 64a_{L2}.

A first fastener passage 66a may be defined by the first lateral body portion 64a_{L1}. A second fastener passage 66b may be defined by the second lateral body portion 64a_{L2}. The first and second fastener passages 66a, 66b extend through the thickness T₆₄ₐ of the firearm-engaging body portion 64a.

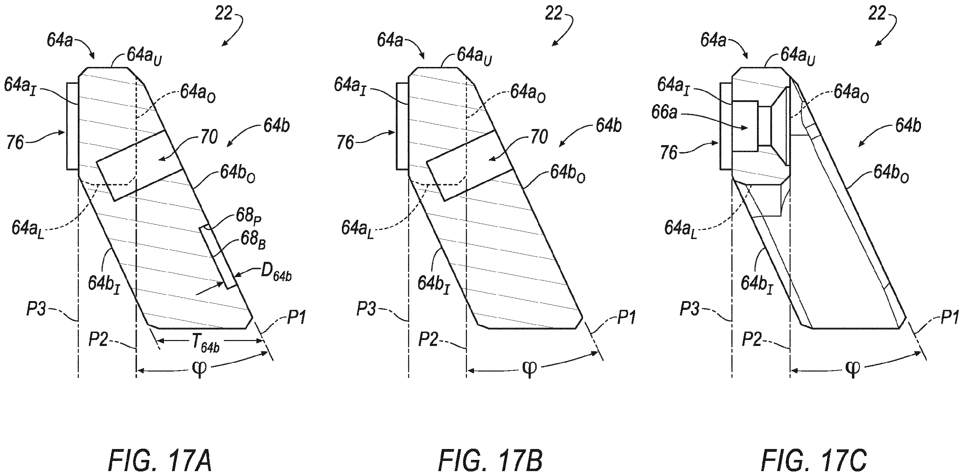

With reference to FIGS. 17A-17C, the biased latch subassembly-engaging body portion 64b extends from one or both of the outer surface 64ao and the lower surface 64a_{L} of the firearm-engaging body portion 64a. In an example, as seen in FIG. 16A, the biased latch subassembly-engaging body portion 64b extends from one or both of the outer surface 64ao and the lower surface 64a_{L} of the firearm-engaging body portion 64a between the proximal end 64a_{L1-P} of the first lateral body portion 64a_{L1} and the proximal end 64a_{L2-P} of the second lateral body portion 64a_{L2}; as a result, the biased latch subassembly-engaging body portion 64b may be defined as extending from the central body portion 64ac of the firearm-engaging body portion 64a.

In an implementation, as seen in FIGS. 17A-17C the biased latch subassembly-engaging body portion 64b extends away from the outer surface 64ao of the firearm-engaging body portion 64a at a biased latch subassembly-engaging body portion angle ϕ. The biased latch subassembly-engaging body portion angle ϕ may be referenced from a first reference plane P1 aligned with and extending across the outer surface 64bo of the biased latch subassembly-engaging body portion 64b and a second reference plane P2 aligned with and extending across the outer surface 64ao of the firearm-engaging body portion 64a. In an example, the biased latch subassembly-engaging body portion angle ϕ may be approximately equal to 20°. The second reference plane P2 aligned with and extending across the outer surface 64ao of the firearm-engaging body portion 64a may be substantially parallel to a third reference plane P3 aligned with and extending across the inner surface 64a_{I} of the firearm-engaging body portion 64a.

Referring to FIG. 16A, the outer surface 64bo of the biased latch subassembly-engaging body portion 64b may define a plurality of rocker latch-receiving recesses 66 that extend into a thickness T_{64b} (see, e.g., FIG. 17A) of the biased latch subassembly-engaging body portion 64b at a depth D_{64b} (see, e.g., FIG. 17A). The thickness T_{64b} may be bound by the outer surface 64bo of the biased latch subassembly-engaging body portion 64b and an inner surface 64b_{I} (see, e.g., FIGS. 17A-17C) of the biased latch subassembly-engaging body portion 64b. In an implementation, the depth D_{64b} is not equal to the thickness T_{64b} of the biased latch subassembly-engaging body portion 64b, and as a result, the plurality of rocker latch-receiving recesses 66 do not extend through the entire thickness T_{64b} of the biased latch subassembly-engaging body portion 64b.

In an example, as seen in FIGS. 16A and 17A, the outer surface 64bₒ of the biased latch subassembly-engaging body portion 64b that defines each rocker latch-receiving recesses 66₀, 66₊₁, 66₊₂, 66₋₁, 66₋₂ of the plurality of rocker latch-receiving recesses 66 includes a recess surface 68_{B} and a perimeter recess surface 68_{P}. The perimeter recess surface 68_{P} is connected to and may extend substantially perpendicularly from the outer surface 64bo of the biased latch subassembly-engaging body portion 64b. The recess surface 68_{B} is connected to and may extend substantially perpendicularly from the perimeter recess surface 68_{P}. As seen in FIG. 17A, the perimeter recess surface 68_{P} extends between the recess surface 68_{B} and the outer surface 64bo of the biased latch subassembly-engaging body portion 64b at a distance approximately equal to the depth D64b.

Referring to FIG. 16A, the plurality of rocker latch-receiving recesses 66 may include at least two (see, e.g., reference numerals 66₀, 66₊₁, 66₊₂, 66₋₁, 66₋₂) rocker latch-receiving recesses 66. In an example, the plurality of rocker latch-receiving recesses 66 includes five rocker latch-receiving recesses 66₀, 66₊₁, 66₊₂, 66₋₁, 66₋₂ defined by, for example: a neutral leg orientation recess 66₀, a first positively-indexed leg orientation recess 66₊₁, a second positively-indexed leg orientation recess 66₊₂, a first negatively-indexed leg orientation recess 66₋₁ and a second negatively-indexed leg orientation recess 66₋₂.

In an example, the plurality of rocker latch-receiving recesses 66 are arranged in an arcuate orientation to permit selective pivotable adjustment (in a positive direction according to arrow P or a negative direction according to arrow P') of the biased latch subassembly 24 in one of a plurality of orientations along, for example, a 180° arc as seen in FIGS. 14A-14D. According to the illustrated example at FIGS. 14A-14D, the five rocker latch-receiving recesses 66₀, 66₊₁, 66₊₂, 66₋₁, 66₋₂ permit the biased latch subassembly 24 to be pivotally-adjusted P / P' (see, e.g., FIGS. 14A-14D) relative the indexing plate 22 from, for example, a neutral orientation (see, e.g., FIG. 14A where the rocker latch 38 of the biased latch subassembly 24 is registered within the neutral leg orientation recess 66₀) to any desirable orientation, such as, for example: (1) a first forward orientation pivoted +45° from the neutral for registration within the first positively-indexed leg orientation recess 66₊₁, (2) a second forward orientation pivoted +90° from the neutral for registration within the second positively-indexed leg orientation recess 66₊₂, (3) a first rearward orientation pivoted -45° from the neutral for registration within the first negatively-indexed leg orientation recess 66₋₁ or (4) a second rearward orientation pivoted -90° from the neutral for registration within the second negatively-indexed leg orientation recess 66₋₂.

Referring to FIGS. 1A, 16A and 17A-17B, the plate body 64 may further define a pivot-pin-receiving passage 70. The pivot-pin-receiving passage 70 may extend through both of the firearm-engaging body portion 64a and the biased latch subassembly-engaging body portion 64b between the inner surface 64a_{I} of the firearm-engaging body portion 64a and the outer surface 64bo of the biased latch subassembly-engaging body portion 64b. As seen in FIG. 16A, the pivot-pin-receiving passage 70 may be formed in an axial center 72 of the arcuate orientation of the plurality of rocker latch-receiving recesses 66.

As seen in FIG. 1A, the pivot-pin-receiving passage 70 of the plate body 64 of the indexing plate 22 is co-axially aligned with the axis A₃₀ₐ-A₃₀ₐ extending through the pivot-pin-receiving passage 30a of the shaft body 28 of the biased latch subassembly 24. After co-axially aligning the pivot-pin-receiving passages 30a, 70 of the shaft body 28 and the plate body 64, the pivot pin 26 is disposed within the pivot-pin-receiving passages 30a, 70 of the shaft body 28 and the plate body 64 for pivotally-connecting P the biased latch subassembly 24 to the indexing plate 22.

After the pivotally-connecting P the biased latch subassembly 24 to the indexing plate 22, the pod assembly 10 may be utilized by a user. In an example, the user may apply the pulling force (see, e.g., arrow Y') to the latch actuator pull sleeve 48 for overcoming the axial bias (see, e.g., arrow Y) and radial bias (see, e.g., arrow X) of the axial biasing member 44 and the radial biasing member 36 as described above. When the rocker latch 38 is rotated R / R' as described above in response to the pulling force Y' / the axial bias Y described above, a head portion 74 (see, e.g., FIGS. 1A, 6-7 and 15A-15D) of the rocker latch 38 may be registered within / de-registered from any rocker latch-receiving recesses 66₀, 66₊₁, 66₊₂, 66₋₁, 66₋₂ of the plurality of rocker latch-receiving recesses 66.

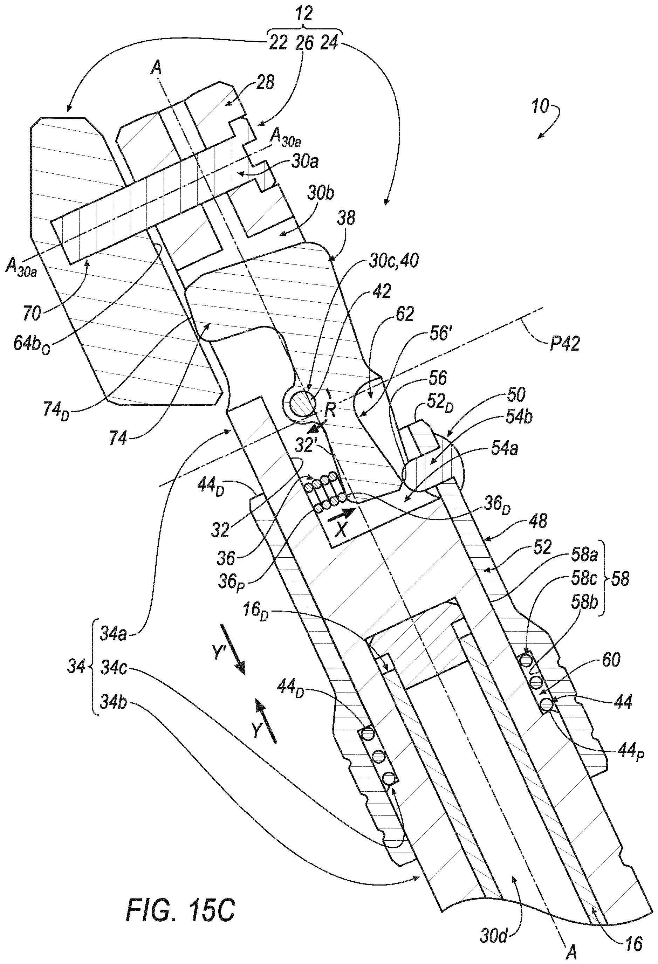

In an example, as seen in FIGS. 15B and 15C, when a user pulls the latch actuator pull sleeve 48 with the pulling force Y', the rocker latch 38 is rotated R in order to cause the head portion 74 of the rocker latch 38 to be withdrawn from / de-registered from any rocker latch-receiving recesses 66₀, 66₊₁, 66₊₂, 66₋₁, 66₋₂ of the plurality of rocker latch-receiving recesses 66. Conversely, in an example, as seen in FIGS. 15A and 15D, when a user is not applying the pulling force Y' to the latch actuator pull sleeve 48, the axial bias Y imparted by the axial biasing member 44 is translated through intervening structure (see, e.g., reference numerals 38, 48, 50) of the biased latch subassembly 24 such that the radial bias X imparted by the radial biasing member 36 rotationally urges R' the head portion 74 of the rocker latch 38 for registration within any rocker latch-receiving recesses 66₀, 66₊₁, 66₊₂, 66₋₁, 66₋₂ of the plurality of rocker latch-receiving recesses 66 such that at least a distal surface 74_{D} (see also, e.g., FIG. 7) of the head portion 74 of the rocker latch 38 is biased into / registered within any rocker latch-receiving recesses 66₀, 66₊₁, 66₊₂, 66₋₁, 66₋₂ of the plurality of rocker latch-receiving recesses 66.

Furthermore (with reference to FIG. 15C), in the event that the user is not applying the pulling force Y' to the latch actuator pull sleeve 48 when the head portion 74 of the rocker latch 38 is not aligned with a rocker latch-receiving recesses 66₀, 66₊₁, 66₊₂, 66₋₁, 66₋₂ of the plurality of rocker latch-receiving recesses 66, the axial bias Y imparted by the axial biasing member 44 may be translated through intervening structure (see, e.g., reference numerals 38, 48, 50) of the biased latch subassembly 24 such that the radial bias X imparted by the radial biasing member 36 may rotationally urge (see, e.g., arrow R' in FIGS. 15A, 15D) the head portion 74 of the rocker latch 38 adjacent the outer surface 64bo of the biased latch subassembly-engaging body portion 64b of the plate body 64 of the indexing plate 22 such that the distal surface 74_{D} of the head portion 74 of the rocker latch 38 is biased into / disposed adjacent the outer surface 64bo of the biased latch subassembly-engaging body portion 64b and not registered within any rocker latch-receiving recesses 66₀, 66₊₁, 66₊₂, 66₋₁, 66₋₂ of the plurality of rocker latch-receiving recesses 66. In such an intermediate orientation whereby the rocker latch 38 is arranged between neighboring rocker latch-receiving recesses 66₀, 66₊₁, 66₊₂, 66₋₁, 66₋₂ of the plurality of rocker latch-receiving recesses 66, the user is still permitted to pivot P / P' the biased latch subassembly 24 relative the indexing plate 22 until the head portion 74 of the rocker latch 38 is aligned with a rocker latch-receiving recesses 66₀, 66₊₁, 66₊₂, 66₋₁, 66₋₂ of the plurality of rocker latch-receiving recesses 66. Upon aligning the rocker latch 38 with a rocker latch-receiving recesses 66₀, 66₊₁, 66₊₂, 66₋₁, 66₋₂ of the plurality of rocker latch-receiving recesses 66 in response to the pivoting movement P / P', the axial bias Y imparted by the axial biasing member 44 is translated through intervening structure (see, e.g., reference numerals 38, 48, 50) of the biased latch subassembly 24 such that the radial bias X imparted by the radial biasing member 36 rotationally urges R' the head portion 74 of the rocker latch 38 for automatic registration within any rocker latch-receiving recesses 66₀, 66₊₁, 66₊₂, 66₋₁, 66₋₂ of the plurality of rocker latch-receiving recesses 66 such that at least the distal surface 74_{D} of the head portion 74 of the rocker latch 38 is automatically biased into / automatically registered within any rocker latch-receiving recesses 66₀, 66₊₁, 66₊₂, 66₋₁, 66₋₂ of the plurality of rocker latch-receiving recesses 66.

Referring to FIGS. 18A-18B, an exemplary pod assembly 10a, which may be substantially similar to the pod assembly 10 described above, is shown attached to a device, such as, for example, a firearm F for forming a firearm implement system 100. In an example, the pod assembly 10a is shown attached to a mounting rail R_{S1} of the firearm F.

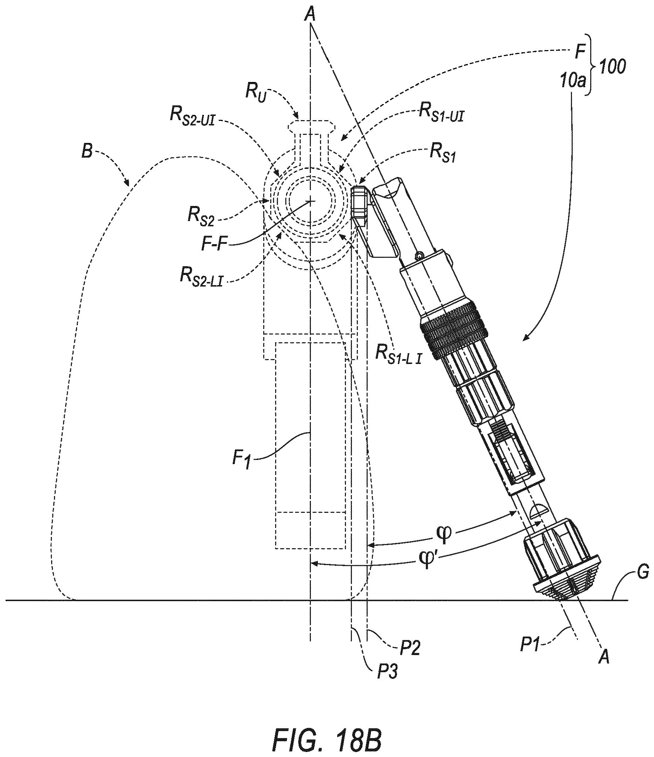

In an example, the mounting rail R_{S1} may be one mounting rail of a plurality of mounting rails of the firearm F. In an example, as seen in FIGS. 18A-18B, the firearm F may include seven mounting rails including, for example, a first lateral side mounting rail R_{S1}, a second lateral side mounting rail R_{S2} (see, e.g., FIG. 18B), an upper mounting rail R_{U}, a first upper-intermediate side mounting rail R_{S1-UI}, a first lower-intermediate side mounting rail R_{S1-LI}, a second upper-intermediate side mounting rail R_{S2-UI} (see, e.g., FIG. 18B) and a second lower-intermediate side mounting rail R_{S2-LI} (see, e.g., FIG. 18B). The first lateral side mounting rail R_{S1} is arranged opposite the second lateral side mounting rail R_{S2}, and the upper mounting rail R_{U} is arranged between the first lateral side mounting rail R_{S1} and the second lateral side mounting rail R_{S2} and an upper mounting rail Rᵤ. In an implementation, each of the mounting rails R_{S1}, R_{S1-UI}, R_{S1-LI}, R_{S2}, R_{S2-UI}, R_{S2-LI}, R_{U} described above is not a lower mounting rail (that would be located directly opposite the upper mounting rail Rᵤ), and, as seen in FIGS. 18A-18B, the firearm F does not include a lower mounting rail.

In conjunction with the exemplary configuration of the mounting rails R_{S1}, R_{S1-UI}, R_{S1-LI}, R_{S2}, R_{S2-UI}, R_{S2-LI}, R_{U} described above, the pod assembly 10a is shown attached to the first lateral side mounting rail R_{S1}. In such an exemplary implementation, when the pod assembly 10a is attached to the first lateral side mounting rail R_{S1}, the indexing plate 22 of the leg indexing portion 12 is only attached to the first lateral side mounting rail R_{S1} and not to any other mounting rail (e.g., the second lateral side mounting rail R_{S2} and the upper mounting rail R_{U}) of the plurality of mounting rails.

As seen in FIG. 18A, in an implementation, the indexing plate 22 of the leg indexing portion 12 of the pod assembly 10a is attached to the first lateral side mounting rail R_{S1} by firstly inserting: (1) a fastener 102a through the first fastener passage 66a defined by the first lateral body portion 64a_{L1} of the firearm-engaging body portion 64a of the plate body 64 of the indexing plate 22 and (2) a fastener 102b through the second fastener passage 66b defined by the second lateral body portion 64a_{L2} of the firearm-engaging body portion 64a of the plate body 64 of the indexing plate 22. After the fasteners 102a, 102b are interested into the first and second fastener passages 66a, 66b of the indexing plate 22 as described above, the fasteners 102a, 102b are further extended into corresponding fastener passages (not shown) formed by the first lateral side mounting rail R_{S1} of the firearm F.

In an example, the fastener passages formed by the first lateral side mounting rail R_{S1} of the firearm F may include any desirable geometry such as, for example, a 'keymod' geometry. Although fasteners 102a, 102b and fastener passages are described above utilizing a 'keymod' geometry, the indexing plate 22 may be designed to include an alternative attachment geometry for attaching the indexing plate 22 to the first lateral side mounting rail R_{S1} of the firearm F in another manner; for example, the inner surface 64a_{I} of the firearm-engaging body portion 64a of the plate body 64 of the indexing plate 22 may be formed to include a 'Weaver-style' or 'Picatinny-style' geometry that interfaces with a corresponding 'Weaver-style' or 'Picatinny-style' geometry of the first lateral side mounting rail R_{S1} of the firearm F.

Furthermore, as seen in FIGS. 16B-16C and 17A-17C, the inner surface 64a_{I} of the firearm-engaging body portion 64a of the plate body 64 of each indexing plate 22 may include one or more (e.g., two) rail registration projections 76. The rail registration projections 76 may be inserted into passages (not shown) formed by the first lateral side mounting rail R_{S1} of the firearm F prior to the fasteners 102a, 102b being extended into corresponding fastener passages (not shown) formed by the first lateral side mounting rail R_{S1} of the firearm F. In an example, by firstly registering the rail registration projections 76 within the passages formed by the first lateral side mounting rail R_{S1} of the firearm F, the first fastener passage 66a defined by the first lateral body portion 64a_{L1} of the firearm-engaging body portion 64a of the plate body 64 of the indexing plate 22 and the second fastener passage 66b defined by the second lateral body portion 64a_{L2} of the firearm-engaging body portion 64a of the plate body 64 of the indexing plate 22 may be automatically-aligned with corresponding passages formed by the first lateral side mounting rail R_{S1} of the firearm F for receiving the fasteners 102a, 102b.

Referring to FIG. 18B, when the pod assembly 10a is attached to the first lateral side mounting rail R_{S1} of the firearm F, the pod assembly 10a may function as a mono-pod. In some implementations, a user may desire the pod assembly 10a to act as a mono-pod extending from a side portion (i.e., the region of the firearm F generally defined by the first lateral side mounting rail R_{S1} of the firearm F) and not the bottom portion (i.e., the region of the firearm F generally defined by the bottom side of the firearm F where a lower mounting rail is not provided) of the firearm F whereby the user desires to utilize a portion of the ambient environment (see, e.g., a rock or boulder B in FIGS. 18A-18B) as a support surface that is disposed adjacent one or more of an opposite side portion (i.e., the region of the firearm F generally defined by the second lateral side mounting rail R_{S2} of the firearm F) and the bottom portion (i.e., the region of the firearm F generally defined by the bottom side of the firearm F where a lower mounting rail is not provided) of the firearm F.

With continued reference to FIG. 18B, the pod assembly 10a may also (or alternatively) function as a hand grip extending from, for example, a side portion (i.e., the region of the firearm F generally defined by the first lateral side mounting rail R_{S1} of the firearm F) and not the bottom portion (e.g., the region of the firearm F generally defined by the bottom side of the firearm F where a lower mounting rail is not provided) of the firearm F. In such a configuration, one or both of the first outer diameter D₂₈₋₁ and the second outer diameter D₂₈₋₂ of the shaft body 28 of the leg indexing portion 12 may be sized for receiving a user's hand, palm or fingers arranged there-about.

With continued reference to FIG. 18B, a firearm axis F-F (see also FIG. 18A) is co-axial with a central axis extending along the entire length of the firearm F. A firearm plane F1 that is substantially orthogonal to an underlying ground surface G intersects with the firearm axis F-F and the axis A-A extending through the pod assembly 10a. Furthermore, as seen in FIG. 18B, when the pod assembly 10a is attached to the first lateral side mounting rail R_{S1} of the firearm F, the first reference plane P1 is substantially parallel to the axis A-A extending through the pod assembly 10a. Even further, each of the second reference plane P2 and the third reference plane P3 is substantially parallel to the firearm plane F1. Yet even further, the third reference plane P3 is aligned with a lateral side rail plane (not shown); the lateral side rail plane is aligned with and extends across an outer surface (not shown) of the first lateral side mounting rail R_{S1} of the firearm F. Therefore, for illustrative purposes, the third reference plane P3 may also be the lateral side rail plane of the first lateral side mounting rail R_{S1} when the pod assembly 10a is attached to the firearm F.

As a result of the relationship between the axes A-A, F-F and planes P1, P2, P3, F1 described above, the biased latch subassembly-engaging body portion angle ϕ also defines a firearm support angle ϕ'. As seen in FIG. 18B, the firearm support angle ϕ' is bound by the axis A-A and the firearm plane F1. Therefore, in an example, if the biased latch subassembly-engaging body portion angle ϕ is approximately equal to 20°, then the firearm support angle ϕ' is also approximately equal to 20°.

Furthermore, because the biased latch subassembly 24 of the pod assembly 10a is pivotably connected P / P' to the indexing plate 22 of the pod assembly 10a, any pivoting movement P / P' of the leg indexing portion 12 of the first pod assembly 10a relative the firearm F is limited according to the arrows P / P' (see, e.g., FIGS. 14A-14D). In other words, the pod assembly 10a is not pivotably-configured in a manner to 'collapse' the leg indexing portion 12 relative the firearm F by, for example, reducing the firearm support angle ϕ' (in order to, for example, pivotably-adjust the leg indexing portion 12 in a manner for locating, as an example, the optional foot portion 18 of the optional telescoping leg portion 14 substantially below or under either of the first lower-intermediate side mounting rail R_{S1-LI} or the second lower-intermediate side mounting rail R_{S2-LI}. In an example, however, the pod assembly 10a is pivotably-configured in a manner to 'collapse' the leg indexing portion 12 relative the firearm F by, for example, pivoting P' the biased latch subassembly 24 relative the indexing plate 22 such that the head portion 74 of the rocker latch 38 is registered within the second negatively-indexed leg orientation recess 66₋₂ such that the biased latch subassembly 24 is pivoted P' relative the indexing plate 22 to the second rearward orientation -90° in order to arrange the biased latch subassembly 24 along the barrel of the firearm F.

Referring to FIGS. 19A-19B, a first exemplary pod assembly 10a and a second exemplary pod assembly 10b, which may both be substantially similar to the pod assembly 10 described above, are shown attached to a firearm F for forming a firearm implement system 200. In an example, the pod assembly 10a is shown attached to a first mounting rail R_{S1} of the firearm F and the pod assembly 10b is shown attached to a second mounting rail R_{S2} of the firearm F that is opposite the first mounting rail R_{S1} of the firearm F.

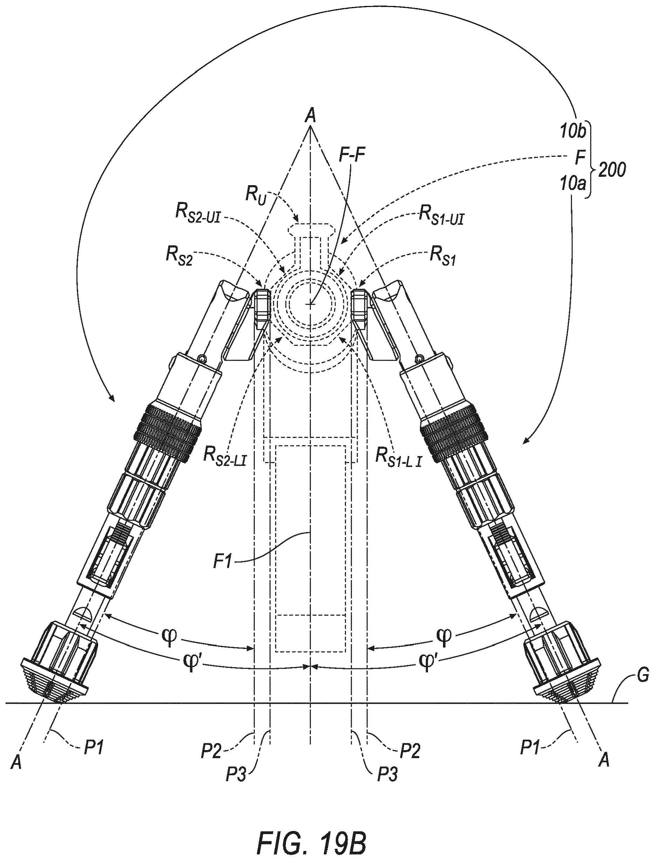

In an example, the first mounting rail R_{S1} may be one mounting rail of a plurality of mounting rails of the firearm F; furthermore, in an example, the second mounting rail R_{S2} may be another mounting rail of a plurality of mounting rails of the firearm F. In an example, as seen in FIGS. 19A-19B, the firearm F may include seven mounting rails including, for example, a first lateral side mounting rail R_{S1}, a second lateral side mounting rail R_{S2} and an upper mounting rail R_{U}, a first upper-intermediate side mounting rail R_{S1-UI}, a first lower-intermediate side mounting rail R_{S1-LI}, a second upper-intermediate side mounting rail R_{S2-UI} (see, e.g., FIG. 19B) and a second lower-intermediate side mounting rail R_{S2-LI} (see, e.g., FIG. 19B). The first lateral side mounting rail R_{S1} is arranged opposite the second lateral side mounting rail R_{S2}, and the upper mounting rail R_{U} is arranged between the first lateral side mounting rail R_{S1} and the second lateral side mounting rail R_{S2} and an upper mounting rail R_{U}. In an implementation, each of the mounting rails R_{S1}, R_{S1-UI}, R_{S1-LI}, R_{S2}, R_{S2-UI}, R_{S2-LI}, R_{U} described above is not a lower mounting rail (that would be located directly opposite the upper mounting rail R_{U}), and, as seen in FIGS. 19A-19B, the firearm F does not include a lower mounting rail.

In conjunction with the exemplary configuration of the mounting rails R_{S1}, R_{S1-UI}, R_{S1-LI}, R_{S2}, R_{S2-UI}, R_{S2-LI}, R_{U} described above, the first pod assembly 10a is shown attached to the first lateral side mounting rail R_{S1} and the second pod assembly 10b is shown attached to the second lateral side mounting rail R_{S2}. In such an exemplary implementation, when the first pod assembly 10a is attached to the first lateral side mounting rail R_{S1}, the indexing plate 22 of the leg indexing portion 12 of the first pod assembly 10a is only attached to the first lateral side mounting rail R_{S1} and not to any other mounting rail (e.g., the second lateral side mounting rail R_{S2} and the upper mounting rail R_{U}) of the plurality of mounting rails; furthermore, in such an exemplary implementation, when the second pod assembly 10b is attached to the second lateral side mounting rail R_{S2}, the indexing plate 22 of the leg indexing portion 12 of the second pod assembly 10b is only attached to the second lateral side mounting rail R_{S2} and not to any other mounting rail (e.g., the first lateral side mounting rail R_{S1} and the upper mounting rail R_{U}) of the plurality of mounting rails.

In an implementation, the indexing plate 22 of the leg indexing portion 12 of each of the first pod assembly 10a and the second pod assembly 10b is attached, respectively, to the first lateral side mounting rail R_{S1} and the second lateral side mounting rail R_{S2} by firstly inserting: (1) a fastener 102a through the first fastener passage 66a defined by the first lateral body portion 64a_{L1} of the firearm-engaging body portion 64a of the plate body 64 of the indexing plate 22 and (2) a fastener 102b through the second fastener passage 66b defined by the second lateral body portion 64a_{L2} of the firearm-engaging body portion 64a of the plate body 64 of the indexing plate 22. After the fasteners 102a, 102b are interested into the first and second fastener passages 66a, 66b of the indexing plate 22 as described above, the fasteners 102a, 102b are further extended into corresponding fastener passages (not shown) formed respectively by the first lateral side mounting rail R_{S1} and the second lateral side mounting rail R_{S2} of the firearm F. Referring to FIG. 19B, when the first pod assembly 10a and the second pod assembly 10b are respectively attached to the first lateral side mounting rail R_{S1} and the second lateral side mounting rail R_{S2} of the firearm F, the first pod assembly 10a and the second pod assembly 10b may cooperate with the firearm F to function as a bi-pod.

With reference to FIG. 19B, either of the first pod assembly 10a or the second pod assembly 10b may also (or alternatively) function as a hand grip extending from, for example, a side portion (e.g., the region of the firearm F generally defined by the first lateral side mounting rail R_{S1} or the second lateral side mounting rail R_{S2} of the firearm F) and not the bottom portion (i.e., the region of the firearm F generally defined by the bottom side of the firearm F where a lower mounting rail is not provided) of the firearm F. In such a configuration, one or both of the first outer diameter D₂₈₋₁ and the second outer diameter D₂₈₋₂ of the shaft body 28 of the leg indexing portion 12 may be sized for receiving a user's hand, palm or fingers arranged there-about.

In an example, the fastener passages formed respectively by the first lateral side mounting rail R_{S1} and the second lateral side mounting rail R_{S2} of the firearm F may include any desirable geometry such as, for example, a 'keymod' geometry. Although fasteners 102a, 102b and fastener passages are described above utilizing a 'keymod' geometry, the indexing plate 22 may be designed to include an alternative attachment geometry for attaching the respective indexing plates 22 to the first lateral side mounting rail R_{S1} and the second lateral side mounting rail R_{S2} of the firearm F in another manner; for example, the inner surface 64a_{I} of the firearm-engaging body portion 64a of the plate body 64 of each indexing plate 22 may be formed to include a 'Weaver-style' or 'Picatinny-style' geometry that interfaces with a corresponding 'Weaver-style' or 'Picatinny-style' geometry of, respectively, the first lateral side mounting rail R_{S1} and the second lateral side mounting rail R_{S2} of the firearm F.

Furthermore, as described above at FIGS. 16B-16C and 17A-17C, the inner surface 64a_{I} of the firearm-engaging body portion 64a of the plate body 64 of each indexing plate 22 may include one or more (e.g., two) rail registration projections 76. The rail registration projections 76 may be inserted into passages (not shown) formed by the first lateral side mounting rail R_{S1} of the firearm F prior to the fasteners 102a, 102b being extended into corresponding fastener passages (not shown) formed by the first lateral side mounting rail R_{S1} of the firearm F. In an example, by firstly registering the rail registration projections 76 within the passages formed by the first lateral side mounting rail R_{S1} of the firearm F, the first fastener passage 66a defined by the first lateral body portion 64a_{L1} of the firearm-engaging body portion 64a of the plate body 64 of the indexing plate 22 and the second fastener passage 66b defined by the second lateral body portion 64a_{L2} of the firearm-engaging body portion 64a of the plate body 64 of the indexing plate 22 may be automatically-aligned with corresponding passages formed by the first lateral side mounting rail R_{S1} of the firearm F for receiving the fasteners 102a, 102b.

With continued reference to FIG. 19B, a firearm axis F-F (see also FIG. 19A) is co-axial with a central axis extending along the entire length of the firearm F. A firearm plane F1 that is substantially orthogonal to an underlying ground surface G intersects with the firearm axis F-F and the axis A-A extending through the pod assembly 10a. Furthermore, as seen in FIG. 19B, when the first pod assembly 10a is attached to the first lateral side mounting rail R_{S1} of the firearm F and when the second pod assembly 10b is attached to the second lateral side mounting rail R_{S2} of the firearm F, the first reference plane P1 of each of the first pod assembly 10a and the second pod assembly 10b is substantially parallel to the axis A-A extending through each pod assembly 10a, 10b. Even further, each of the second reference plane P2 and the third reference plane P3 of each of the first pod assembly 10a and the second pod assembly 10b is substantially parallel to the firearm plane F1. Yet even further, the third reference plane P3 of each of the first pod assembly 10a and the second pod assembly 10b is aligned with a lateral side rail plane (not shown); with respect to the first pod assembly 10a, the lateral side rail plane is aligned with and extending across an outer surface (not shown) first lateral side mounting rail R_{S1} of the firearm F, and, with respect to the second pod assembly 10b, the lateral side rail plane is aligned with and extending across an outer surface (not shown) second lateral side mounting rail R_{S2} of the firearm F. Therefore, for illustrative purposes, the third reference plane P3 may also be the lateral side rail plane of: the first lateral side mounting rail R_{S1} (with respect to the first pod assembly 10a), and, respectively, the second lateral side mounting rail R_{S2} (with respect to the second pod assembly 10b) when the first pod assembly 10a and the second pod assembly 10b are attached to the firearm F.

As a result of the relationship between the axes A-A, F-F and planes P1, P2, P3, F1 described above, the biased latch subassembly-engaging body portion angle ϕ also defines a firearm support angle ϕ' of each of the first pod assembly 10a and the second pod assembly 10b. As seen in FIG. 19B, the firearm support angle ϕ' of each of the first pod assembly 10a and the second pod assembly 10b is bound by firearm plane F1 and the respective axis A-A extending through each of the first pod assembly 10a and the second pod assembly 10b. Therefore, in an example, if the biased latch subassembly-engaging body portion angle ϕ is approximately equal to 20°, then the firearm support angle ϕ' of each of the first pod assembly 10a and the second pod assembly 10b is also approximately equal to 20°. Because the first pod assembly 10a and the second pod assembly 10b cooperate with the firearm F to function as a bi-pod as described above, in an example, if the firearm support angle ϕ' of the first pod assembly 10a is approximately equal to 20° and, in an example, if the firearm support angle ϕ' of the second pod assembly 10b is approximately equal to 20°, then the firearm support angle ϕ' of each of the first pod assembly 10a and the second pod assembly 10b may cooperate to form a bi-pod firearm support angle that is approximately equal to 40°.

Furthermore, because the biased latch subassembly 24 of each of the first pod assembly 10a and the second pod assembly 10b is pivotably connected P / P' to the indexing plate 22 of the pod assembly 10a, any pivoting movement P / P' of the leg indexing portion 12 of each of the first pod assembly 10a and the second pod assembly 10b relative the firearm F is limited according to the arrows P / P' (see, e.g., FIGS. 14A-14D). In other words, each of the first pod assembly 10a and the second pod assembly 10b is not pivotably-configured in a manner to 'collapse' the leg indexing portion 12 of each of the first pod assembly 10a and the second pod assembly 10b relative the firearm F by, for example, reducing the firearm support angle ϕ' of each of the first pod assembly 10a and the second pod assembly 10b (in order to, for example, pivotably-adjust the leg indexing portion 12 of each of the first pod assembly 10a and the second pod assembly 10b in a manner for locating, as an example, the optional foot portion 18 of the optional telescoping leg portion 14 of each of the first pod assembly 10a and the second pod assembly 10b substantially below or under either of the first lower-intermediate side mounting rail R_{S1-LI} (with respect to, for example, the first pod assembly 10a) or the second lower-intermediate side mounting rail R_{S2-LI} (with respect to, for example, the second pod assembly 10b). In an example, however, one or more of the first pod assembly 10a and the second pod assembly 10b is/are pivotably-configured in a manner to 'collapse' the leg indexing portion 12 of one or both of the first pod assembly 10a and the second pod assembly 10b relative the firearm F by, for example, pivoting P / P' the biased latch subassembly 24 relative the indexing plate 22. In an example, the biased latch subassembly 24 of the first pod assembly 10a may be pivoted P' relative the indexing plate 22 of the first pod assembly 10a such that the head portion 74 of the rocker latch 38 is registered within the second negatively-indexed leg orientation recess 66₋₂ such that the biased latch subassembly 24 of the first pod assembly is pivoted P' approximately -90° relative the indexing plate 22 in order to arrange the biased latch subassembly 24 of the first pod assembly 10a along the barrel of the firearm F.

A number of implementations have been described. Nevertheless, it will be understood that various modifications may be made without departing from the scope of the disclosure. Accordingly, other implementations are within the scope of the following claims. For example, the actions recited in the claims can be performed in a different order and still achieve desirable results.

## Claims

1. A pod assembly (10), comprising:
a leg indexing portion (12) formed by:
a biased latch subassembly (24) and an indexing plate (22) connected to the biased latch subassembly (24) by a pivot pin (26),
wherein the biased latch subassembly (24) includes: a shaft body (28), a rocker latch (38), a latch pin (42) that rotatably-connects (R / R') the rocker latch (38) to the shaft body (28), a biasing member (36) disposed against the rocker latch (38) and the shaft body (28), wherein the shaft body (28) of the biased latch subassembly (24) defines a shaft body pivot-pin-receiving passage (30a),
wherein the indexing plate (22) includes a plate body (64) defining a device-engaging body portion (64a) and a biased latch subassembly-engaging body portion (64b) extending from the device-engaging body portion (64a) at a biased latch subassembly-engaging body portion angle (ϕ), wherein the plate body (64) further defines an indexing plate pivot-pin-receiving passage (70) extending through at least one of the device-engaging body portion (64a) and the biased latch subassembly-engaging body portion (64b)
wherein the pivot pin (26) is disposed within each of the indexing plate pivot-pin-receiving passage (70) and the shaft body pivot-pin-receiving passage (30a) for pivotally-connecting (P / P') the biased latch subassembly (24) to the indexing plate (22),
wherein the rocker latch (38) is arranged relative the indexing plate (22) for selective registration in one orientation of a plurality of available orientations with the indexing plate (22) for selectively securing the shaft body (28) to the indexing plate (22), **characterised by** a latch actuator pull sleeve (48) engaging a portion of the shaft body (28),
wherein the latch actuator pull sleeve (48) is manipulatable between at least: a first position relative to the shaft body (28) and a second position relative to the shaft body (28), wherein when the latch actuator pull sleeve (48) is arranged in the first position, the latch actuator pull sleeve (48) urges the rocker latch (38) into an un-latched position with the shaft body (28), wherein when the latch actuator pull sleeve (48) is arranged in the second position, the latch actuator pull sleeve (48) permits the rocker latch (38) to assume a latched position relative the shaft body (28).

2. The pod assembly (10) of claim 1, wherein the indexing plate pivot-pin-receiving passage (70) of the indexing plate (22) is co-axially aligned with the shaft body pivot-pin-receiving passage (30a).

3. The pod assembly (10) of any preceding claim, wherein the device-engaging body portion (64a) includes an inner surface (64a_{I}), an outer surface (64a_{O}), an upper surface (64a_{U}) and a lower surface (64a_{L}), wherein the device-engaging body portion (64a) is further defined by a thickness (T₆₄ₐ) extending between the inner surface (64a_{I}) and the outer surface (64a_{O}), wherein the device-engaging body portion defines at least one fastener passage (66a, 66b) extending through the thickness (T₆₄ₐ).

4. The pod assembly (10) of claim 3, wherein an outer surface (64b_{O}) of the biased latch subassembly-engaging body portion (64b) defines a plurality of rocker latch-receiving recesses (66) that extend into a thickness (T_{64b}) of the biased latch subassembly-engaging body portion (64b) at a depth (D_{64b}), wherein the thickness (T_{64b}) of the biased latch subassembly-engaging body portion (64b) is bound by the outer surface (64b_{O}) of the biased latch subassembly-engaging body portion (64b) and an inner surface (64b_{I}) of the biased latch subassembly-engaging body portion (64b).

5. The pod assembly (10) of claim 4, wherein the depth (D_{64b}) is not equal to the thickness (T_{64b}) of the biased latch subassembly-engaging body portion (64b).

6. The pod assembly (10) of claim 4 or 5, wherein each rocker latch-receiving recess (66₀, 66₊₁, 66₊₂, 66₋₁, 66₋₂) of the plurality of rocker latch-receiving recesses (66) includes a recess surface (68_{B}) and a perimeter recess surface (68_{P}).

7. The pod assembly (10) of claim 4, 5, or 6, wherein the axial biasing member (44) imparts an axial bias (Y) to the latch actuator pull sleeve (48) relative the shaft body (28) while the radial biasing member (36) imparts a radial bias (X) to the rocker latch (38) to impart rotation (R) of the rocker latch (38) for urging registration of a head portion (74) of the rocker latch (38) into a rocker latch-receiving recess (66₀, 66₊₁, 66₊₂, 66₋₁, 66₋₂) of the plurality of rocker latch-receiving recesses (66) to prevent pivotal movement (P / P') of the biased latch subassembly (24) relative to the indexing plate (22).

8. The pod assembly (10) of claim 7, wherein application of a pulling force (Y') to the latch actuator pull sleeve (48) opposite the axial bias (Y) overcomes the axial bias (Y) imparted by the axial biasing member (44) and the radial bias (X) imparted by the radial biasing member (36) in order to impart an opposite rotation (R') of the rocker latch (38) for de-registering the head portion (74) of the rocker latch (38) from the rocker latch-receiving recess (66₀, 66₊₁, 66₊₂, 66₋₁, 66₋₂) of the plurality of rocker latch-receiving recesses (66) to permit pivotal movement (P / P') of the biased latch subassembly (24) relative to the indexing plate (22).

9. The pod assembly (10) of any one of claims 4-8, wherein the plurality of rocker latch-receiving recesses (66) include at least two rocker latch-receiving recesses (66₀, 66₊₁, 66₊₂, 66₋₁, 66₋₂).

10. The pod assembly (10) of claim 9, wherein the at least two rocker latch-receiving recesses (66₀, 66₊₁, 66₊₂, 66₋₁, 66₋₂) include:
a neutral leg orientation recess (66₀),
at least one positively-indexed leg orientation recess (66₊₁, 66₊₂) that is positively arcuately offset from the neutral leg orientation recess (66₀), and
at least one negatively-indexed leg orientation recess (66₋₁, 66₋₂) that is negatively arcuately offset from the neutral leg orientation recess (66₀),
optionally wherein the at least one positively-indexed leg orientation recess (66₊₁, 66₊₂) includes:
a first positively-indexed leg orientation recess (66₊₁) that is positively arcuately offset from the neutral leg orientation recess (66₀) at a first positive distance, and
a second positively-indexed leg orientation recess (66₊₂) that is positively arcuately offset from the neutral leg orientation recess (66₀) at a second positive distance that is greater than the first positive distance, wherein the at least one negatively-indexed leg orientation recess (66₋₁, 66₋₂) includes:
a first negatively-indexed leg orientation recess (66₋₁) that is negatively arcuately offset from the neutral leg orientation recess (66₀) at a first negative distance, and
a second negatively-indexed leg orientation recess (66₋₂) that is negatively arcuately offset from the neutral leg orientation recess (66₀) at a second negative distance that is greater than the first negative distance,
optionally wherein the first positively-indexed leg orientation recess (66₊₁) is positively arcuately offset from the neutral leg orientation recess (66₀) at an angle approximately equal to +45°, wherein the second positively-indexed leg orientation recess (66₊₂) is positively arcuately offset from the neutral leg orientation recess (66₀) at an angle approximately equal to +90°, wherein the first negatively-indexed leg orientation recess (66₋₁) is negatively arcuately offset from the neutral leg orientation recess (66₀) at an angle approximately equal to -45°, wherein the second negatively-indexed leg orientation recess (66₊₂) is negatively arcuately offset from the neutral leg orientation recess (66₀) at an angle approximately equal to -90°

11. The pod assembly (10) of any one of claims 3 to 10, wherein the device-engaging body portion (64a) is further defined by:
a central body portion (64a_{C}),
a first lateral body portion (64a_{L1}), and
a second lateral body portion (64a_{L2}), wherein each of the first lateral body portion (64a_{L1}) and the second lateral body portion (64a_{L2}) are defined by a proximal end (64a_{L1-P}, 64a_{L2-P}) and a distal end (64a_{L1-D}, 64a_{L2-D}), wherein the central body portion (64ac) extends between the proximal end (64a_{L1-P}) of the first lateral body portion (64a_{L1}) and the proximal end (64a_{L2-P}) of the second lateral body portion (64a_{L2}).

12. The pod assembly (10) of claim 11, wherein the at least one fastener passage (66a, 66b) includes:
a first fastener passage (66a), and
a second fastener passage (66b), wherein the first fastener passage (66a) is defined by the first lateral body portion (64a_{L1}), wherein the second fastener passage (66b) is defined by the second lateral body portion (64a_{L2}),
optionally wherein the biased latch subassembly-engaging body portion (64b) extends from the central body portion (64a_{C}) of the device-engaging body portion (64a).

13. The pod assembly (10) of any one of claims 4 to 12, wherein the biased latch subassembly-engaging body portion angle (ϕ) is bound by a first reference plane (P1) that is aligned with and extends across the outer surface (64b_{O}) of the biased latch subassembly-engaging body portion (64b) and a second reference plane (P2) that is aligned with and extends across the outer surface (64a_{O}) of the device-engaging body portion (64a), wherein the second reference plane (P2) is substantially parallel to a third reference plane (P3) that is aligned with and extends across the inner surface (64a_{I}) of the device-engaging body portion (64a),
optionally wherein the biased latch subassembly-engaging body portion angle (ϕ) is approximately equal to 20°.

14. The pod assembly (10) of any one of claims 4 to 12, wherein the indexing plate pivot-pin-receiving passage (70) extends through at least one of the device-engaging body portion (64a) and the biased latch subassembly-engaging body portion (64b) between the inner surface (64a_{I}) of the device-engaging body portion (64a) and the outer surface (64b_{O}) of the biased latch subassembly-engaging body portion (64b).

## Patentansprüche

1. Stativanordnung (10), die Folgendes umfasst:
einen Ständerrastabschnitt (12), der durch Folgendes gebildet wird:
eine vorgespannte Verriegelungsunteranordnung (24) und eine Rastplatte (22), die durch einen Drehzapfen (26) mit der vorgespannten Verriegelungsunteranordnung (24) verbunden ist,
wobei die vorgespannte Verriegelungsunteranordnung (24) Folgendes umfasst: einen Schaftkörper (28), eine Schnappverriegelung (38), einen Verriegelungsstift (42), der die Schnappverriegelung (38) drehbar mit dem Schaftkörper (28) verbindet (R/R'), ein Vorspannglied (36), das an der Schnappverriegelung (38) und dem Schaftkörper (28) anliegend angeordnet ist, wobei der Schaftkörper (28) der vorgespannten Verriegelungsunteranordnung (24) einen Schaftkörperdrehzapfenaufnahmedurchgang (30a) definiert,
wobei die Rastplatte (22) einen Plattenkörper (64) umfasst, der einen eine Vorrichtung in Eingriff nehmenden Körperabschnitt (64a) und einen die vorgespannte Verriegelungsunteranordnung in Eingriff nehmenden Körperabschnitt (64b), der sich von dem eine Vorrichtung in Eingriff nehmenden Körperabschnitt (64a) in einem Winkel (cp) des die vorgespannte Verriegelungsunteranordnung in Eingriff nehmenden Körperabschnitts erstreckt, definiert, wobei der Plattenkörper (64) ferner einen Rastplattendrehzapfenaufnahmedurchgang (70) definiert, der sich durch den eine Vorrichtung in Eingriff nehmenden Körperabschnitt (64a) und/oder den die vorgespannte Verriegelungsunteranordnung in Eingriff nehmenden Körperabschnitt (64b) erstreckt,
wobei der Drehzapfen (26) sowohl in dem Rastplattendrehzapfenaufnahmedurchgang (70) als auch dem Schaftkörperdrehzapfenaufnahmedurchgang (30a) zur Schwenkverbindung (P/P') der vorgespannten Verriegelungsunteranordnung (24) mit der Rastplatte (22) angeordnet ist,
wobei die Schnappverriegelung (38) bezüglich der Rastplatte (22) zur selektiven Anordnung in einer Ausrichtung von mehreren zur Verfügung stehenden Ausrichtungen auf die Rastplatte (22) zur selektiven Sicherung des Schaftkörpers (28) an der Rastplatte (22) angeordnet ist,
**gekennzeichnet durch** eine Verriegelungsaktuatorzughülle (48), die mit einem Abschnitt des Schaftkörpers (28) in Eingriff steht,
wobei die Verriegelungsaktuatorzughülle (48) zwischen mindestens einer ersten Position bezüglich des Schaftkörpers (28) und einer zweiten Position bezüglich des Schaftkörpers (28) manipulierbar ist, wobei die Verriegelungsaktuatorzughülle (48), wenn die Verriegelungsaktuatorzughülle (48) in der ersten Position angeordnet ist, die Schnappverriegelung (38) in eine entriegele Position mit dem Schaftkörper (28) drückt, wobei die Verriegelungsaktuatorzughülle (48), wenn die Verriegelungsaktuatorzughülle (48) in der zweiten Position angeordnet ist, gestattet, dass die Schnappverriegelung (38) eine verriegelte Position bezüglich des Schaftkörpers (28) einnimmt.

2. Stativanordnung (10) nach Anspruch 1, wobei der Rastplattendrehzapfenaufnahmedurchgang (70) der Rastplatte (22) koaxial mit dem Schaftkörperdrehzapfenaufnahmedurchgang (30a) ausgerichtet ist.

3. Stativanordnung (10) nach einem vorhergehenden Anspruch, wobei der eine Vorrichtung in Eingriff nehmende Körperabschnitt (64a) eine Innenfläche (64aI), eine Außenfläche (64aO), eine obere Fläche (64aU) und eine untere Fläche (64aL) umfasst, wobei der eine Vorrichtung in Eingriff nehmende Körperabschnitt (64a) ferner durch eine Dicke (T64a), die sich zwischen der Innenfläche (64aI) und der Außenfläche (64O) erstreckt, definiert wird, wobei der eine Vorrichtung in Eingriff nehmende Körperabschnitt mindestens einen Befestigungsmitteldurchgang (66a, 66b) definiert, der durch die Dicke (T64a) verläuft.

4. Stativanordnung (10) nach Anspruch 3, wobei eine Außenfläche (64bO) des die vorgespannte Verriegelungsunteranordnung in Eingriff nehmenden Körperabschnitts (64b) mehrere Schnappverriegelungsaufnahmevertiefungen (66) definiert, die sich in eine Dicke (T64b) des die vorgespannte Verriegelungsunteranordnung in Eingriff nehmenden Körperabschnitts (64b) mit einer Tiefe (D64b) erstrecken, wobei die Dicke (T64b) des die vorgespannte Verriegelungsunteranordnung in Eingriff nehmenden Körperabschnitts (64b) durch die Außenfläche (64bO) des die vorgespannte Verriegelungsunteranordnung in Eingriff nehmenden Körperabschnitts (64b) und eine Innenfläche (64bI) des die vorgespannte Verriegelungsunteranordnung in Eingriff nehmenden Körperabschnitts (64b) begrenzt wird.

5. Stativanordnung (10) nach Anspruch 4, wobei die Tiefe (D64b) nicht der Dicke (T64b) des die vorgespannte Verriegelungsunteranordnung in Eingriff nehmenden Körperabschnitts (64b) entspricht.

6. Stativanordnung (10) nach Anspruch 4 oder 5, wobei jede Schnappverriegelungsaufnahmevertiefung (66₀, 66₊₁, 66₊₂, 66₋₁, 66₋₂) der mehreren Schnappverriegelungsaufnahmevertiefungen (66) eine Vertiefungsfläche (68B) und eine Peripherievertiefungsfläche (68P) umfasst.

7. Stativanordnung (10) nach Anspruch 4, 5 oder 6, wobei das axiale Vorspannglied (44) eine axiale Vorspannung (Y) an die Verriegelungsaktuatorzughülle (48) bezüglich des Schaftkörpers (28) anlegt, während das radiale Vorspannglied (36) dahingehend eine radiale Vorspannung (X) an die Schnappverriegelung (38) anlegt, eine Drehung (R) der Schnappverriegelung (38) zum Erzwingen der Anordnung eines Kopfabschnitts (74) der Schnappverriegelung (38) in einer Schnappverriegelungsaufnahmevertiefung (66₀, 66₊₁, 66₊₂, 66₋₁, 66₋₂) der mehreren Schnappverriegelungsaufnahmevertiefungen (66) zur Verhinderung einer Schwenkbewegung (P/P') der vorgespannten Verriegelungsunteranordnung (24) bezüglich der Rastplatte (22) zu bewirken.

8. Stativanordnung (10) nach Anspruch 7, wobei das Anlegen einer Zugkraft (Y') an die Verriegelungsaktuatorzughülle (48) entgegen der axialen Vorspannung (Y) die durch das axiale Vorspannglied (44) angelegte axiale Vorspannung (Y) und die durch das radiale Vorspannglied (36) angelegte radiale Vorspannung (X) dahingehend überwindet, eine entgegengesetzte Drehung (R') der Schnappverriegelung (38) zum Lösen des Kopfabschnitts (74) der Schnappverriegelung (38) aus der Schnappverriegelungsaufnahmevertiefung (66₀, 66₊₁, 66₊₂, 66₋₁, 66₋₂) der mehreren Schnappverriegelungsaufnahmevertiefungen (66) zum Gestatten einer Schwenkbewegung (P/P') der vorgespannten Verriegelungsunteranordnung (24) bezüglich der Rastplatte (22) zu bewirken.

9. Stativanordnung (10) nach einem der Ansprüche 4-8, wobei die mehreren Schnappverriegelungsaufnahmevertiefungen (66) mindestens zwei Schnappverriegelungsaufnahmevertiefungen (66₀, 66₊₁, 66₊₂, 66₋₁, 66₋₂) umfassen.

10. Stativanordnung (10) nach Anspruch 9, wobei die mindestens zwei Schnappverriegelungsaufnahmevertiefungen (66₀, 66₊₁, 66₊₂, 66₋₁, 66₋₂) Folgendes umfassen:
eine Vertiefung (66₀) zur neutralen Ständerausrichtung,
mindestens eine Vertiefung (66₊₁, 66₊₂) zur positiv gerasteten Ständerausrichtung, die von der Vertiefung (66₀) zur neutralen Ständerausrichtung positiv bogenförmig versetzt ist, und
mindestens eine Vertiefung (66₋₁, 66₋₂) zur negativ gerasteten Ständerausrichtung, die von der Vertiefung (66₀) zur neutralen Ständerausrichtung negativ bogenförmig versetzt ist,
wobei optional die mindestens eine Vertiefung (66₊₁, 66₊₂) zur positiv gerasteten Ständerausrichtung Folgendes umfasst:
eine erste Vertiefung (66₊₁) zur positiv gerasteten Ständerausrichtung, die in einem ersten positiven Abstand von der Vertiefung (66₀) zur neutralen Ständerausrichtung positiv bogenförmig versetzt ist, und
eine zweite Vertiefung (66₊₂) zur positiv gerasteten Ständerausrichtung, die in einem zweiten positiven Abstand, der mehr als der erste positive Abstand beträgt, von der Vertiefung (66₀) zur neutralen Ständerausrichtung positiv bogenförmig versetzt ist, wobei die mindestens eine Vertiefung (66₋₁, 66₋₂) zur negativ gerasteten Ständerausrichtung Folgendes umfasst:
eine erste Vertiefung (66₋₁) zur negativ gerasteten Ständerausrichtung, die in einem ersten negativen Abstand von der Vertiefung (66₀) zur neutralen Ständerausrichtung negativ bogenförmig versetzt ist, und
eine zweite Vertiefung (66₋₂) zur negativ gerasteten Ständerausrichtung, die in einem zweiten negativen Abstand, der mehr als der erste negative Abstand beträgt, von der Vertiefung (66₀) zur neutralen Ständerausrichtung negativ bogenförmig versetzt ist,
wobei optional die erste Vertiefung (66₊₁) zur positiv gerasteten Ständerausrichtung in einem Winkel, der ungefähr +45° entspricht, von der Vertiefung (66₀) zur neutralen Ständerausrichtung positiv bogenförmig versetzt ist, wobei die zweite Vertiefung (66₊₂) zur positiv gerasteten Ständerausrichtung in einem Winkel, der ungefähr +90° entspricht, von der Vertiefung (66₀) zur neutralen Ständerausrichtung positiv bogenförmig versetzt ist, wobei die erste Vertiefung (66₋₁) zur negativ gerasteten Ständerausrichtung in einem Winkel, der ungefähr -45° entspricht, von der Vertiefung (66₀) zur neutralen Ständerausrichtung negativ bogenförmig versetzt ist, wobei die zweite Vertiefung (66₋₂) zur negativ gerasteten Ständerausrichtung in einem Winkel, der ungefähr - 90° entspricht, von der Vertiefung (66₀) zur neutralen Ständerausrichtung negativ bogenförmig versetzt ist.

11. Stativanordnung (10) nach einem der Ansprüche 3-10, wobei der eine Vorrichtung in Eingriff nehmende Körperabschnitt (64a) ferner durch Folgendes definiert wird:
einen mittigen Körperabschnitt (64aC),
einen ersten lateralen Körperabschnitt (64aL1) und einen zweiten lateralen Körperabschnitt (64aL2),
wobei sowohl der erste laterale Körperabschnitt (64aL1) als auch der zweite laterale Körperabschnitt (64aL2) durch ein proximales Ende (64aL1-P, 64aL2-P) und ein distales Ende (64aL1-D, 64aL2-D) definiert werden, wobei sich der mittige Körperabschnitt (64aC) zwischen dem proximalen Ende (64aL1-P) des ersten lateralen Körperabschnitts (64aL1) und dem proximalen Ende (64aL2-P) des zweiten lateralen Körperabschnitts (64aL2) erstreckt.

12. Stativanordnung (10) nach Anspruch 11, wobei der mindestens eine Befestigungsmitteldurchgang (66a, 66b) Folgendes umfasst:
einen ersten Befestigungsmitteldurchgang (66a) und einen zweiten Befestigungsmitteldurchgang (66b),
wobei der erste Befestigungsmitteldurchgang (66a) durch den ersten lateralen Körperabschnitt (64aL1) definiert wird, wobei der zweite Befestigungsmitteldurchgang (66b) durch den zweiten lateralen Körperabschnitt (64aL2) definiert wird,
wobei sich optional der die vorgespannte Verriegelungsunteranordnung in Eingriff nehmende Körperabschnitt (64b) von dem mittigen Körperabschnitt (64aC) des eine Vorrichtung in Eingriff nehmenden Körperabschnitts (64a) erstreckt.

13. Stativanordnung (10) nach einem der Ansprüche 4-12, wobei der Winkel (ϕ) des die vorgespannte Verriegelungsunteranordnung in Eingriff nehmenden Körperabschnitts durch eine erste Bezugsebene (P1), die auf die Außenfläche (64bO) des die vorgespannte Verriegelungsunteranordnung in Eingriff nehmenden Körperabschnitts (64b) ausgerichtet ist und sich über diese hinweg erstreckt, und eine zweite Bezugsebene (P2), die auf die Außenfläche (64aO) des eine Vorrichtung in Eingriff nehmenden Körperabschnitts (64a) ausgerichtet ist und sich über diese hinweg erstreckt, begrenzt wird, wobei die zweite Bezugsebene (P2) im Wesentlichen parallel zu einer dritten Bezugsebene (P3), die auf die Innenfläche (64aI) des eine Vorrichtung in Eingriff nehmenden Körperabschnitts (64a) ausgerichtet ist und sich über diese hinweg erstreckt, ist,
wobei optional der Winkel (ϕ) des die vorgespannte Verriegelungsunteranordnung in Eingriff nehmenden Körperabschnitts ungefähr 20° entspricht.

14. Stativanordnung (10) nach einem der Ansprüche 4-12, wobei sich der Rastplattendrehzapfenaufnahmedurchgang (70) durch den eine Vorrichtung in Eingriff nehmenden Körperabschnitt (64a) und/oder den die vorgespannte Verriegelungsunteranordnung in Eingriff nehmenden Körperabschnitt (64b) zwischen der Innenfläche (64aI) des eine Vorrichtung in Eingriff nehmenden Körperabschnitts (64a) und der Außenfläche (64bO) des die vorgespannte Verriegelungsunteranordnung in Eingriff nehmenden Körperabschnitts (64b) erstreckt.

## Revendications

1. Ensemble de pied (10), comprenant :
une partie d'indexage de montants (12) formée par
un sous-ensemble de verrouillage précontraint (24) et une plaque d'indexage (22) connectée au sous-ensemble de verrouillage précontraint (24) par un pivot (26),
le sous-ensemble de verrouillage précontraint (24) comportant : un corps d'arbre (28), un verrou à bascule (38), une goupille de verrouillage (42) qui relie de manière rotative (R / R') le verrou à bascule (38) au corps d'arbre (28), un organe de sollicitation (36) disposé contre le verrou à bascule (38) et le corps d'arbre (28), le corps d'arbre (28) du sous-ensemble de verrouillage précontraint (24) définissant un passage (30a) de réception de pivot du corps d'arbre,
la plaque d'indexage (22) comportant un corps de plaque (64) définissant une partie de corps (64a) venant en prise avec un dispositif et une partie de corps (64b) venant en prise avec le sous-ensemble de verrouillage précontraint s'étendant depuis la partie de corps (64a) venant en prise avec un dispositif suivant un angle (ϕ) de partie de corps venant en prise avec le sous-ensemble de verrouillage précontraint, le corps de plaque (64) définissant en outre un passage (70) de réception de pivot de plaque d'indexage s'étendant à travers au moins l'une parmi la partie de corps (64a) venant en prise avec un dispositif et la partie de corps (64b) venant en prise avec le sous-ensemble de verrouillage précontraint,
le pivot (26) étant disposé à l'intérieur de chacun parmi le passage (70) de réception de pivot de plaque d'indexage et le passage (30a) de réception de pivot du corps d'arbre, pour relier de manière pivotante (P/P') le sous-ensemble de verrouillage précontraint (24) à la plaque d'indexage (22),
le verrou à bascule (38) étant disposé par rapport à la plaque d'indexage (22) de manière à être aligné de manière sélective, suivant une orientation parmi une pluralité d'orientations disponibles, avec la plaque d'indexage (22), pour fixer de manière sélective le corps d'arbre (28) à la plaque d'indexage (22),
**caractérisé par** un manchon de traction d'actionneur de verrou (48) venant en prise avec une partie du corps d'arbre (28), le manchon de traction d'actionneur de verrou (48) pouvant être manipulé entre au moins : une première position par rapport au corps d'arbre (28) et une deuxième position par rapport au corps d'arbre (28), le manchon de traction d'actionneur de verrou (48), lorsqu'il est disposé dans la première position, poussant le verrou à bascule (38) dans une position verrouillée avec le corps d'arbre (28), et le manchon de traction d'actionnement de verrou (48), lorsqu'il est disposé dans la deuxième position, permettant au verrou à bascule (38) d'adopter une position verrouillée par rapport au corps d'arbre (28).

2. Ensemble de pied (10) selon la revendication 1, dans lequel le passage (70) de réception de pivot de plaque d'indexage de la plaque d'indexage (22) est aligné coaxialement avec le passage (30a) de réception de pivot du corps d'arbre.

3. Ensemble de pied (10) selon l'une quelconque des revendications précédentes, dans lequel la partie de corps (64a) venant en prise avec un dispositif comprend une surface interne (64a_{I}), une surface externe (64a_{O}), une surface supérieure (64a_{U}) et une surface inférieure (64a_{L}), la partie de corps (64a) venant en prise avec un dispositif étant en outre définie par une épaisseur (T₆₄ₐ) s'étendant entre la surface interne (64a_{I}) et la surface externe (64a_{O}), la partie de corps venant en prise avec un dispositif définissant au moins un passage d'attache (66a, 66b) s'étendant à travers l'épaisseur (T₆₄ₐ).

4. Ensemble de pied (10) selon la revendication 3, dans lequel une surface externe (64b_{O}) de la partie de corps (64b) venant en prise avec le sous-ensemble de verrouillage précontraint définit une pluralité de renfoncements (66) de réception de verrou à bascule qui s'étendent jusque dans une épaisseur (T_{64b}) de la partie de corps (64b) venant en prise avec le sous-ensemble de verrouillage précontraint à une profondeur (D_{64b}), l'épaisseur (T_{64b}) de la partie de corps (64b) venant en prise avec le sous-ensemble de verrouillage précontraint étant bordée par la surface externe (64b_{O}) de la partie de corps (64b) venant en prise avec le sous-ensemble de verrouillage précontraint et par une surface interne (64b_{I}) de la partie de corps (64b) venant en prise avec le sous-ensemble de verrouillage précontraint.

5. Ensemble de pied (10) selon la revendication 4, dans lequel la profondeur (D_{64b}) n'est pas égale à l'épaisseur (T_{64b}) de la partie de corps (64b) venant en prise avec le sous-ensemble de verrouillage précontraint.

6. Ensemble de pied (10) selon la revendication 4 ou 5, dans lequel chaque renfoncement (66₀, 66_{+1,} 66₊₂, 66₋₁, 66₋₂) de réception de verrou à bascule de la pluralité de renfoncements (66) de réception de verrou à bascule comprend une surface en retrait (68_{B}) et une surface en retrait périphérique (68p).

7. Ensemble de pied (10) selon la revendication 4, 5 ou 6, dans lequel l'organe de sollicitation axiale (44) confère une sollicitation axiale (Y) au manchon de traction d'actionneur de verrou (48) par rapport au corps d'arbre (28) tandis que l'organe de sollicitation radiale (36) confère une sollicitation radiale (X) au verrou à bascule (38) afin d'entraîner une rotation (R) du verrou à bascule (38) pour provoquer l'alignement d'une partie de tête (74) du verrou à bascule (38) dans un renfoncement (66₀, 66_{+1,} 66₊₂, 66₋₁, 66₋₂) de réception de verrou à bascule de la pluralité de renfoncements de réception de verrou à bascule (66) pour empêcher un mouvement de pivotement (P/P') du sous-ensemble de verrouillage précontraint (24) par rapport à la plaque d'indexage (22).

8. Ensemble de pied (10) selon la revendication 7, dans lequel l'application d'une force de traction (Y') au manchon de traction d'actionneur de verrou (48) à l'opposé de la sollicitation axiale (Y) surmonte la sollicitation axiale (Y) conférée par l'organe de sollicitation axiale (44) et la sollicitation radiale (X) conférée par l'organe de sollicitation radiale (36) afin d'entraîner une rotation inverse (R') du verrou à bascule (38) afin de désaligner la partie de tête (74) du verrou à bascule (38) du renfoncement (66₀, 66_{+1,} 66₊₂, 66₋₁, 66₋₂) de réception de verrou à bascule de la pluralité de renfoncements (66) de réception de verrou à bascule afin de permettre le mouvement de pivotement (P/P') du sous-ensemble de verrouillage précontraint (24) par rapport à la plaque d'indexage (22).

9. Ensemble de pied (10) selon l'une quelconque des revendications 4 à 8, dans lequel la pluralité de renfoncements (66) de réception de verrou à bascule comprend au moins deux renfoncements de réception de verrou à bascule (66₀, 66_{+1,} 66₊₂, 66₋₁, 66₋₂).

10. Ensemble de pied (10) selon la revendication 9, dans lequel les au moins deux renfoncements (66₀, 66_{+1,} 66₊₂, 66₋₁, 66₋₂) de réception de verrou à bascule comprennent :
un renfoncement d'orientation de montant neutre (66₀),
au moins un renfoncement d'orientation de montant à indexage positif (66₊₁, 66₊₂) qui est décalé positivement suivant un arc par rapport au renfoncement d'orientation de montant neutre (66₀), et
au moins un renfoncement d'orientation de montant à indexage négatif (66₋₁, 66₋₂) qui est décalé négativement suivant un arc par rapport au renfoncement d'orientation de montant neutre (66₀), facultativement, l'au moins un renfoncement d'orientation de montant à indexage positif (66₊₁, 66₊₂) comportant :
un premier renfoncement d'orientation de montant à indexage positif (66₊₁) qui est décalé positivement suivant un arc par rapport au renfoncement d'orientation de montant neutre (66₀) à une première distance positive, et
un deuxième renfoncement d'orientation de montant à indexage positif (66₊₂) qui est décalé positivement suivant un arc par rapport au renfoncement d'orientation de montant neutre (66₀) à une deuxième distance positive qui est supérieure à la première distance positive, l'au moins un renfoncement d'orientation de montant à indexage négatif (66₋₁, 66₋₂) comportant :
un premier renfoncement d'orientation de montant à indexage négatif (66₋₁) qui est décalé négativement suivant un arc par rapport au renfoncement d'orientation de montant neutre (66₀) à une première distance négative, et
un deuxième renfoncement d'orientation de montant à indexage négatif (66₋₂) qui est décalé négativement suivant un arc par rapport au renfoncement d'orientation de montant neutre (66₀) à une deuxième distance négative qui est supérieure à la première distance négative,
facultativement, le premier renfoncement d'orientation de montant à indexage positif (66₊₁) étant décalé positivement suivant un arc par rapport au renfoncement d'orientation de montant neutre (66₀) suivant un angle approximativement égal à +45°, le deuxième renfoncement d'orientation de montant à indexage positif (66₊₂) étant décalé positivement suivant un arc par rapport au renfoncement d'orientation de montant neutre (66₀) suivant un angle approximativement égal à +90°, le premier renfoncement d'orientation de montant à indexage négatif (66₋₁) étant décalé négativement suivant un arc par rapport au renfoncement d'orientation de montant neutre (66₀) suivant un angle approximativement égal à -45°, le deuxième renfoncement d'orientation de montant à indexage négatif (66₋₂) étant décalé négativement suivant un arc par rapport au renfoncement d'orientation de montant neutre (66₀) suivant un angle approximativement égal à -90°.

11. Ensemble de pied (10) selon l'une quelconque des revendications 3 à 10, dans lequel la partie de corps (64a) venant en prise avec un dispositif est en outre définie par :
une partie de corps centrale (64a_{C}),
une première partie de corps latérale (64a_{L1}), et
une deuxième partie de corps latérale (64a_{L2}), chacune parmi la première partie de corps latérale (64a_{L1}) et la deuxième partie de corps latérale (64a_{L2}) étant définie par une extrémité proximale (64a_{L1-P}, 64a_{L2-P}) et une extrémité distale (64a_{L1-D}, 64a_{L2-D}), la partie de corps centrale (64a_{C}) s'étendant entre l'extrémité proximale (64a_{L1-P}) de la première partie de corps latérale (64a_{L1}) et l'extrémité proximale 64a_{L2-P}) de la deuxième partie de corps latérale (64a_{L2}).

12. Ensemble de pied (10) selon la revendication 11, dans lequel l'au moins un passage d'attache (66a, 66b) comprend :
un premier passage d'attache (66a), et
un deuxième passage d'attache (66b), le premier passage d'attache (66a) étant défini par la première partie de corps latérale (64a_{L1}), le deuxième passage d'attache (66b) étant défini par la deuxième partie de corps latérale (64a_{L2}),
facultativement, la partie de corps (64b) venant en prise avec le sous-ensemble de verrouillage précontraint s'étendant depuis la partie de corps centrale (64a_{C}) de la partie de corps (64a) venant en prise avec un dispositif.

13. Ensemble de pied (10) selon l'une quelconque des revendications 4 à 12, dans lequel l'angle (ϕ) de partie de corps venant en prise avec le sous-ensemble de verrouillage précontraint est limité par un premier plan de référence (P1) qui est aligné avec, et s'étend en travers de, la surface externe (64b_{O}) de la partie de corps (64b) venant en prise avec le sous-ensemble de verrouillage précontraint, et par un deuxième plan de référence (P2) qui est aligné avec, et s'étend en travers de, la surface externe (64a_{O}) de la partie de corps (64a) venant en prise avec un dispositif, le deuxième plan de référence (P2) étant sensiblement parallèle à un troisième plan de référence (P3) qui est aligné avec, et s'étend en travers de, la surface interne (64a_{I}) de la partie de corps (64a) venant en prise avec un dispositif, facultativement, l'angle (ϕ) de partie de corps venant en prise avec le sous-ensemble de verrouillage précontraint étant approximativement égal à 20°.

14. Ensemble de pied (10) selon l'une quelconque des revendications 4 à 12, dans lequel le passage (70) de réception de pivot de plaque d'indexage s'étend à travers au moins l'une parmi la partie de corps (64a) venant en prise avec un dispositif et la partie de corps (64b) venant en prise avec le sous-ensemble de verrouillage précontraint entre la surface interne (64a_{I}) de la partie de corps (64a) venant en prise avec un dispositif et la surface externe (64b_{O}) de la partie de corps (64b) venant en prise avec le sous-ensemble de verrouillage précontraint.
